# EUROPEAN PATENT APPLICATION

(11) **EP 4 564 246 A1**
(43) Date of publication of application: **04.06.2025**
(21) Application number: 24207679.2
(22) Date of filing: 21.10.2024
(51) Int. Cl.: G06Q 10/02, G06Q 10/06, G06Q 10/08, G06Q 30/06, G07C 9/00, G07C 9/27, G07F 7/06, G07F 17/12, H04L 9/32, H04L 12/28

(54) **SERVER APPARATUS, METHOD, AND CARRIER MEDIUM**

(30) Priority: 28.11.2023 JP 2023201017; 08.08.2024 JP 2024131723
(71) Applicant: Ricoh Company, Ltd., Tokyo 143-8555 (JP)
(72) Inventor: TOMOSUGI, Ryoh, Tokyo, 143-8555 (JP)
(74) Representative: SSM Sandmair

(57) **Abstract**

A server apparatus (1) for managing use of a seat in a facility and use of equipment in the facility includes a seat application receiving unit (101) to receive a first application for requesting use of the seat by a user from a communication terminal, a creation unit (113) to create a list of identification information for identifying the equipment in the facility in response to receiving the first application, an equipment usage information transmitting unit (104) to transmit the list of identification information to the communication terminal, an equipment application receiving unit (103) to receive a second application for requesting use of the equipment by the user, from the communication terminal, the equipment being identified with the identification information, the equipment usage information transmitting unit (104) to transmit, to the communication terminal, information for using the equipment, the information being stored in association with the identification information for identifying the equipment relating to the second application, and a usage information storage unit (111) to store information on the seat relating to the first application and the identification information for identifying the equipment relating to the second application in association with each other.

## Description

### BACKGROUND

### Technical Field

The present disclosure relates to a server apparatus, a method, and a carrier medium.

### Related Art

Currently, an increasing number of companies are introducing a hot desking system and installing a smart locker in order to improve the working style of employees in the office.

The hot desking system is a way of working in the office that allows each employee to freely choose a seat where the employee works. The introduction of the hot desking system brings conveniences such as stimulating communication and saving space in the office.

The smart locker is a locker whose door can be unlocked and locked by holding an identification (ID) card over the locker or entering a one-time passcode. Compared to a regular locker, the smart locker offers conveniences such as enhanced security and user logging records.

While the hot desking system offers the conveniences described above, the hot desking system also has inconveniences such as not knowing which seats are available in the office and who is working in which seat. To address such inconveniences, a technique is known for implementing a seat management system that manages the usage status and the user of each seat using, for example, a server apparatus.

However, the conventional seat management system cannot manage both the use of a facility such as an office and seats, and the use of equipment.

### SUMMARY

In one aspect, a server apparatus for managing use of a seat in a facility and use of equipment in the facility includes a seat application receiving unit to receive a first application for requesting use of the seat by a user from a communication terminal, a creation unit to create a list of identification information for identifying the equipment in the facility in response to receiving the first application, an equipment usage information transmitting unit to transmit the list of identification information to the communication terminal, an equipment application receiving unit to receive a second application for requesting use of the equipment by the user, from the communication terminal, the equipment being identified with the identification information, the equipment usage information transmitting unit to transmit, to the communication terminal, information for using the equipment, the information being stored in association with the identification information for identifying the equipment relating to the second application, and a usage information storage unit to store information on the seat relating to the first application and the identification information for identifying the equipment relating to the second application in association with each other.

In another aspect, a method performed by a server apparatus that manages use of a seat in a facility and use of equipment in the facility includes receiving a first application for requesting use of the seat by a user from a communication terminal, creating a list of identification information for identifying the equipment in the facility in response to receiving the first application, transmitting the list of identification information to the communication terminal, receiving a second application for requesting use of the equipment by the user from the communication terminal, the equipment being identified with the identification information, storing information on the seat relating to the first application and the identification information for identifying the equipment relating to the second application in association with each other, and transmitting, to the communication terminal, information for using the equipment, the information being stored in association with the identification information for identifying the equipment relating to the received second application.

In another aspect, a carrier medium carries computer-readable code for controlling a server apparatus that manages use of a seat in a facility and use of equipment in the facility to carry out a method including receiving a first application for requesting use of the seat by a user from a communication terminal, creating a list of identification information for identifying the equipment in the facility in response to receiving the first application, transmitting the list of identification information to the communication terminal, receiving a second application for requesting use of the equipment by the user from the communication terminal, the equipment being identified with the identification information, storing information on the seat relating to the first application and the identification information for identifying the equipment relating to the second application in association with each other, and transmitting, to the communication terminal, information for using the equipment, the information being stored in association with the identification information for identifying the equipment relating to the received second application.

According to the present disclosure, both the use of a facility and seats and the use of equipment are managed.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an overall configuration of an information processing system;
FIG. 2 is a block diagram illustrating a hardware configuration of an information processing apparatus;
FIG. 3 is a block diagram illustrating a hardware configuration of an information processing terminal;
FIG. 4 is a block diagram illustrating a functional configuration of an information processing apparatus;
FIG. 5 is a diagram illustrating customer information;
FIG. 6 is a diagram illustrating customer information;
FIG. 7 is a diagram illustrating information on a seat;
FIG. 8 is a diagram illustrating equipment information;
FIG. 9 is a diagram illustrating usage information;
FIG. 10 (FIGS. 10A and 10B) is a sequence diagram illustrating the process for making applications for using a seat and equipment;
FIG. 11 is a sequence diagram illustrating the process for displaying a usage status;
FIG. 12 is a sequence diagram illustrating a notification process of unreturned equipment;
FIG. 13 is a diagram illustrating the transition of a screen used when the use of a seat and equipment starts;
FIG. 14 is a diagram illustrating the transition of a screen used when the use of a seat and equipment ends;
FIG. 15 is a diagram illustrating each screen presenting the usage status;
FIG. 16 is a diagram illustrating a screen presenting a notification of unreturned equipment;
FIG. 17 is a sequence diagram illustrating a case where a seat and equipment are booked in advance;
FIG. 18 is a diagram illustrating a user interface used in the case where a seat and equipment are booked in advance;
FIG. 19 is a sequence diagram illustrating the process for registering equipment;
FIG. 20 is a diagram illustrating a user interface used for registering equipment;
FIG. 21 is a sequence diagram illustrating the process for transmitting unlocking information and returning unreturned equipment;
FIG. 22 is a diagram illustrating a user interface used for returning equipment;
FIG. 23 is a diagram illustrating a table used for managing unlocking information;
FIG. 24 is a block diagram illustrating a functional configuration of an information processing apparatus according to the second embodiment;
FIG. 25 is a sequence diagram illustrating the process for making applications for using a seat and equipment according to the second embodiment;
FIG. 26 is a diagram illustrating an overall configuration of an information processing system according to the third embodiment;
FIG. 27 is a block diagram illustrating a functional configuration of a locker management apparatus according to the third embodiment;
FIG. 28 is a sequence diagram illustrating the process for making applications for using a seat and equipment according to the third embodiment;
FIG. 29 (FIGS. 29A and 29B) is a sequence diagram illustrating the process for making applications for using a seat and equipment according to the fourth embodiment;
FIG. 30 is a diagram illustrating a user interface according to the fourth embodiment;
FIG. 31 is a diagram illustrating an overall configuration of an information processing system according to the fifth embodiment;
FIG. 32 is a block diagram illustrating a functional configuration of an information processing apparatus according to the fifth embodiment;
FIG. 33 is a sequence diagram illustrating the process for making applications for using a seat and equipment according to the fifth embodiment;
FIG. 34 is a diagram illustrating a table used for managing information for using equipment according to the fifth embodiment;
FIG. 35 is a block diagram illustrating a functional configuration of an information processing apparatus according to the sixth embodiment;
FIG. 36 is a diagram illustrating a table used for managing unlocking information according to the sixth embodiment;
FIG. 37 is a sequence diagram illustrating the process for making applications for using a seat and equipment according to the sixth embodiment; and
FIG. 38 is a diagram illustrating a user interface according to the seventh embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present disclosure are described in detail below with reference to the drawings.

### Terminology

1) A "seat" is a place (e.g., a desk and a chair) in a facility such as an office where work is carried out.
2) "Equipment" may be any object that a user uses in the facility. For example, the equipment is an object stored in a locker. For example, the equipment is the locker itself. For example, the equipment is an object not stored in the locker. The number of pieces of equipment that the user can use may be one or more.
3) "Information for using equipment" is information necessary for the user to use the equipment. For example, the information for using equipment is unlocking information for unlocking the locker in which the equipment is stored. For example, the information for using equipment is at least one of information indicating a location where the equipment is arranged and information indicating a procedure for using the equipment.

### First Embodiment

### Overall Configuration

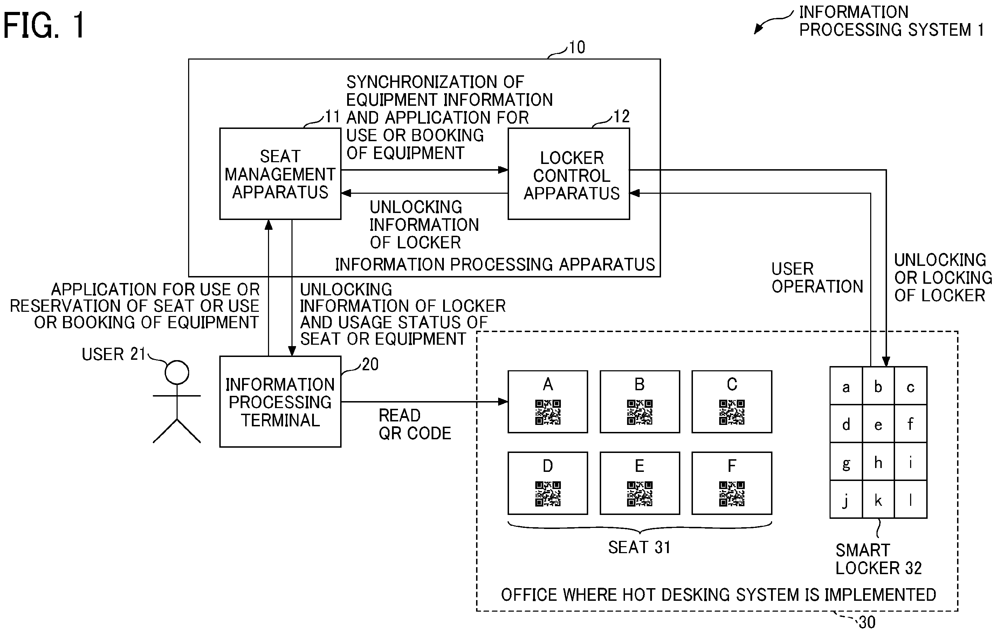

FIG. 1 is a diagram illustrating an overall configuration of an information processing system 1. The information processing system 1 includes an information processing apparatus (also referred to as a server apparatus) 10 and an information processing terminal (also referred to as a communication terminal) 20. The information processing system 1 manages seats (e.g., seats A to F in FIG. 1) 31 and smart lockers (also referred to simply as lockers) (e.g., lockers a to l in FIG. 1) 32 installed in an office 30 where a hot desking system is implemented. In the following description, any one of the seats 31 is referred to as a seat 31 and any one of the lockers 32 is referred to as a locker 32 unless particularly distinguished from each other.

### Information Processing Apparatus

The information processing apparatus 10 may include a seat management apparatus (also referred to as a server apparatus) 11 and a locker control apparatus (also referred to as a server apparatus) 12. The information processing apparatus 10 can transmit and receive data to and from the information processing terminal 20 and the locker 32 through any desired network.

### Seat Management Apparatus

The seat management apparatus 11 manages the usage status of the seats 31 installed in the office (an example of a facility) 30 where the hot desking system is implemented, and receives applications for using a seat and equipment. The seat management apparatus 11 can transmit and receive data to and from the information processing terminal 20 and the locker control apparatus 12 through any desired network. The seat management apparatus 11 is implemented by one or more computers.

Specifically, in response to receiving an application for using the seat 31 from the information processing terminal 20, the seat management apparatus 11 transmits, to the information processing terminal 20, information on the equipment stored in the locker 32, which is available for a user 21 who uses the seat 31. In response to receiving an application for using equipment (which may be one piece of equipment or multiple pieces of equipment) included in the information on the equipment stored in the locker 32 from the information processing terminal 20, the seat management apparatus 11 transmits the application for using the equipment to the locker control apparatus 12. The seat management apparatus 11 transmits, to the information processing terminal 20, unlocking information (e.g., a passcode) of the locker 32 received from the locker control apparatus 12. It is assumed that the seat management apparatus 11 synchronizes the information on the equipment managed by the seat management apparatus 11 with the information on the equipment managed by the locker control apparatus 12.

### Locker Control Apparatus

The locker control apparatus 12 manages the usage status of the equipment stored in the locker (an example of equipment available in the facility) 32 installed in the office 30 where the hot desking system is implemented, and receives a request to unlock or lock the door of the locker 32. The locker control apparatus 12 can transmit and receive data to and from the locker 32 and the seat management apparatus 11 through any desired network. The seat management apparatus 11 is implemented by one or more computers. The seat management apparatus 11 may have the function of the locker control apparatus 12.

The group of apparatuses or devices described in one or more embodiments of the present disclosure is merely one example of plural computing environments that implement the one or more embodiments disclosed herein. In some embodiments, the information processing apparatus 10 includes multiple computing devices such as a server cluster. The multiple computing devices communicate with one another through any type of communication link including, for example, a network or a shared memory, and perform the operations disclosed herein.

### Information Processing Terminal

The information processing terminal 20 is a communication terminal operated by the user 21 who uses the seat 31 installed in the office 30 where the hot desking system is implemented and the equipment stored in the locker 32. The information processing terminal 20 can have a camera function for reading a code such as a QUICK RESPONSE (QR) CODE. For example, the information processing terminal 20 is a tablet terminal, a smartphone, a personal computer, or the like.

### Seat

In the office 30 where the hot desking system is implemented, the seats 31 are installed. A code such as a QR CODE is attached to a certain part of each seat 31. The code such as the QR CODE includes an identifier for identifying each seat 31 and access information to the seat management apparatus 11. The code is not limited to the QR CODE. For example, a one-dimensional code, a two-dimensional code, or a character string including at least one of letters, numbers, or symbols may be used. Alternatively, a near field communication (NFC) tag or a short-range wireless communication device may be provided for each seat, and an application for using a seat may be made via a short-range wireless communication network.

### Locker

In the office 30 where the hot desking system is implemented, the locker 32 is installed. In the locker 32, equipment (e.g., a display, a keyboard, or a headphone) is stored. The user 21 takes out the equipment stored in the locker 32 to use the equipment, and returns the equipment to the locker 32 where the equipment has been stored. The locker 32 can detect that the equipment has been taken out or returned with, for example, a tag attached to the equipment. The locker 32 is described in detail below.

The locker 32 includes a "locker section," a "computer section," and a "lock control section."

The "locker section" is used to store equipment.

The "computer section" has a function of receiving an input through, for example, a touch panel on which the user 21 performs an operation for the locker 32 and an NFC reader over which an identification (ID) card is held by the user 21, a function of displaying information to the user 21, and a function of communicating with the locker control apparatus 12. For example, one computer section may control multiple locker sections and multiple lock control sections (e.g., the lockers a to l in FIG. 1).

The "lock control section" unlocks and locks the door of each locker section in accordance with the instruction of the computer section.

The door of the locker 32 may be transparent so that the user 21 can check the state of the equipment inside the locker 32 without opening the door.

### Hardware Configuration

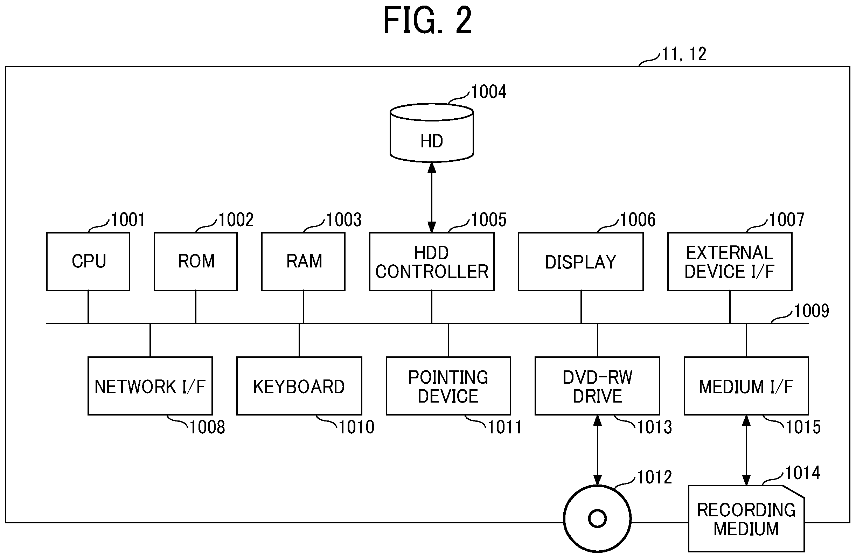

FIG. 2 is a block diagram illustrating a hardware configuration of the information processing apparatus 10 (the seat management apparatus 11, the locker control apparatus 12).

As illustrated in FIG. 2, the information processing apparatus 10 (the seat management apparatus 11, the locker control apparatus 12) is implemented by, for example, a computer, and includes a central processing unit (CPU) 1001, a read-only memory (ROM) 1002, a random-access memory (RAM) 1003, a hard disk (HD) 1004, a hard disk drive (HDD) controller 1005, a display 1006, an external device interface (I/F) 1007, a network I/F 1008, a data bus 1009, a keyboard 1010, a pointing device 1011, a digital versatile disc-rewritable (DVD-RW) drive 1013, and a medium I/F 1015.

The CPU 1001 controls the entire operation of the information processing apparatus 10 (the seat management apparatus 11, the locker control apparatus 12). The ROM 1002 stores a program such as an initial program loader (IPL) to boot the CPU 1001. The RAM 1003 is used as a work area for the CPU 1001. The HD 1004 stores various data such as a program. The HDD controller 1005 controls the reading and writing of data from and to the HD 1004 under the control of the CPU 1001. The display 1006 displays various information such as a cursor, a menu, a window, characters, and images. The external device I/F 1007, which may be implemented by an interface circuit, is an interface that controls the communication of data with various external devices. Examples of the external devices in this case include, but are not limited to, a universal serial bus (USB) memory and a printer. The network I/F 1008, which may be implemented by an interface circuit, is an interface that controls the communication of data through a communication network. The data bus 1009 is, for example, an address bus or a data bus, which electrically connects the components or elements such as the CPU 1001 illustrated in FIG. 2.

The keyboard 1010 serves as an input device provided with a plurality of keys used for, for example, inputting characters, numerical values, and various instructions. The pointing device 1011 serves as an input device used for, for example, selecting or executing various instructions, selecting an object to be processed, and moving a cursor being displayed. The DVD-RW drive 1013 controls the reading and writing of various data from and to a DVD-RW 1012, which serves as a removable recording medium according to the present embodiment. The removable recording medium is not limited to a DVD-RW and may be, for example, a digital versatile disc-recordable (DVD-R). The medium I/F 1015 controls the reading and writing (storing) of data from and to a recording medium 1014 such as a flash memory.

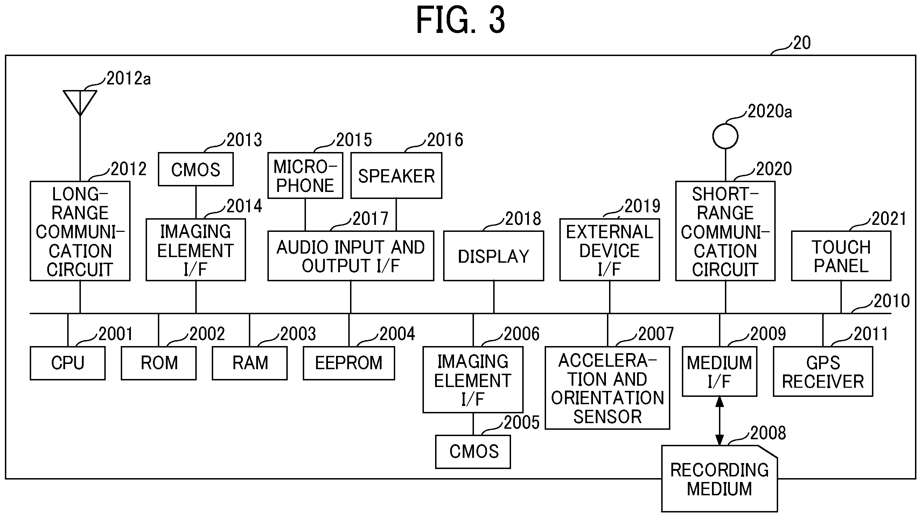

FIG. 3 is a block diagram illustrating a hardware configuration of the information processing terminal 20.

As illustrated in FIG. 3, the information processing terminal 20 includes a CPU 2001, a ROM 2002, a RAM 2003, an electrically erasable programmable read-only memory (EEPROM) 2004, a complementary metal oxide semiconductor (CMOS) sensor 2005, an imaging element I/F 2006, an acceleration and orientation sensor 2007, a medium I/F 2009, and a global positioning system (GPS) receiver 2011.

The CPU 2001 controls the entire operation of the information processing terminal 20. The ROM 2002 stores, for example, a program used by the CPU 2001 and a program such as an IPL to boot the CPU 2001. The RAM 2003 is used as a work area for the CPU 2001. The EEPROM 2004 reads and writes various data such as a program for a smartphone under the control of the CPU 2001. The CMOS sensor 2005 is a kind of built-in imaging device that captures an image of an object (typically, a self-image of the operator) under the control of the CPU 2001 to obtain the image data. In alternative to the CMOS sensor, an imaging device such as a charge-coupled device (CCD) sensor may be used. The imaging element I/F 2006 is a circuit that controls the driving of the CMOS sensor 2005. The acceleration and orientation sensor 2007 serves as various sensors such as an electromagnetic compass for detecting geomagnetism, a gyrocompass, and an acceleration sensor. The medium I/F 2009 controls the reading and writing (storing) of data from and to a recording medium 2008 such as a flash memory. The GPS receiver 2011 receives a GPS signal from a GPS satellite.

The information processing terminal 20 further includes a long-range communication circuit 2012, a CMOS sensor 2013, an imaging element I/F 2014, a microphone 2015, a speaker 2016, an audio input and output I/F 2017, a display 2018, an external device I/F 2019, a short-range communication circuit 2020, an antenna 2020a of the short-range communication circuit 2020, and a touch panel 2021.

The long-range communication circuit 2012 is a circuit for communicating with other devices via a communication network. The CMOS sensor 2013 is a kind of built-in imaging device that captures an image of an object under the control of the CPU 2001 to obtain the image data. The imaging element I/F 2014 is a circuit that controls the driving of the CMOS sensor 2013. The microphone 2015 is a built-in circuit that converts audio into electrical signals. The speaker 2016 is a built-in circuit that converts electrical signals into physical vibrations to generate audio such as music or voice. The audio input and output I/F 2017 is a circuit that processes the input and output of audio signals between the microphone 2015 and the speaker 2016 under the control of the CPU 2001. The display 2018 serves as a display that displays an image of an object and various icons, such as a liquid crystal display or an organic electro-luminescence (EL) display. The external device I/F 2019, which may be implemented by an interface circuit, is an interface for connection with various external devices. The short-range communication circuit 2020 is a communication circuit in compliance with, for example, the NFC or BLUETOOTH. The touch panel 2021 serves as an input device, which allows an operator to touch a screen of the display 2018 to cause the information processing terminal 20 to perform various functions.

The information processing terminal 20 further includes a bus line 2010. The bus line 2010 is, for example, an address bus or a data bus, which electrically connects the components or elements such as the CPU 2001 illustrated in FIG. 3.

### Functional Configuration

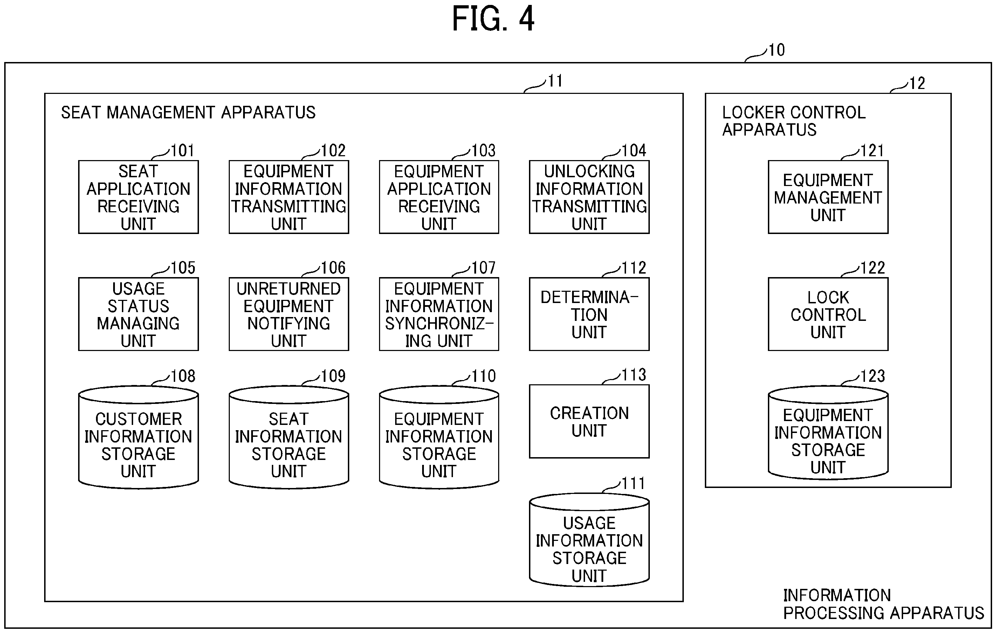

FIG. 4 is a block diagram illustrating a functional configuration of the information processing apparatus 10.

### Seat Management Apparatus

The seat management apparatus 11 includes a seat application receiving unit 101, an equipment information transmitting unit 102, an equipment application receiving unit 103, an unlocking information transmitting unit 104, a usage status managing unit 105, an unreturned equipment notifying unit 106, an equipment information synchronizing unit 107, a customer information storage unit 108, a seat information storage unit 109, an equipment information storage unit 110, a usage information storage unit 111, a determination unit 112, and a creation unit 113. By executing programs, the seat management apparatus 11 performs the respective functions of the seat application receiving unit 101, the equipment information transmitting unit 102, the equipment application receiving unit 103, the unlocking information transmitting unit 104, the usage status managing unit 105, the unreturned equipment notifying unit 106, the equipment information synchronizing unit 107, the determination unit 112, and the creation unit 113.

The seat application receiving unit 101 receives an application for using a seat from the information processing terminal 20. The application for using a seat includes an identifier for identifying the user 21 and an identifier for identifying the seat. In response to receiving the application for using a seat, the seat application receiving unit 101 updates the data in the seat information storage unit 109 (for example, changes the data in the "usage status" in the seat information storage unit 109 to "in use").

### Application for Using Seat

The application for using a seat is described below. The application for using a seat may be an application for requesting to start using the seat immediately after the application is made. In this case, an application for the reservation of the use of the seat may or may not be made in advance. Alternatively, the application for using a seat may be an application for requesting to start using the seat at the date and time specified by the user 21 (that is, an application for the reservation of the use of the seat made in advance).

Also, the seat application receiving unit 101 receives an application for requesting to end using the seat from the information processing terminal 20. In response to receiving the application for requesting to end using the seat from the information processing terminal 20, the seat application receiving unit 101 transmits information on unreturned equipment of the user 21 who has used the seat to the information processing terminal 20.

When the seat application receiving unit 101 receives an application for using a seat, the equipment information transmitting unit 102 transmits, to the information processing terminal 20, information on the equipment (may also referred to as equipment information in the following description) in the locker available for the user 21 who uses the seat. For example, the equipment information is a list that includes information on one or more pieces of equipment.

For example, the equipment information transmitted to the information processing terminal 20 is a list of multiple pieces of equipment arranged in the facility used by the user. In this case, an application for using equipment includes information for identifying the piece of equipment selected by the user from the list of multiple pieces of equipment. For example, the equipment information transmitted to the information processing terminal 20 is information indicating one type of equipment arranged in the facility used by the user. In this case, the application for using equipment is an application indicating that the user uses the one type of equipment.

For example, the equipment information transmitting unit 102 transmits, to the information processing terminal 20, a notification indicating the completion of the reception of the application for using a seat received by the seat application receiving unit 101 and information on the equipment in a locker available for the user 21 who uses the seat. Examples of the notification indicating the completion of the reception of the application for using a seat include a notification indicating that the seat becomes available and a notification indicating that the reservation for the use of the seat is completed.

### Equipment

The equipment is described below. The equipment may be any object used by the user 21 in the office. For example, the equipment includes personal computer peripherals such as a display, a keyboard, a headphone, and the like, and stationery.

### Equipment Information

The equipment information is information on the equipment in the locker available for the user 21 who uses the seat. For example, a locker available for the user 21 who uses the seat is a locker arranged in the same area (for example, the same floor (floor number) or the same room) where the seat used by the user 21 is arranged. The equipment information may include equipment frequently used in the seat used by the user 21, or may not include equipment infrequently used in the seat used by the user 21.

The equipment application receiving unit 103 receives, from the information processing terminal 20, the application for using equipment (which may be one piece of equipment or multiple pieces of equipment) included in the equipment information on the equipment stored in the locker transmitted by the equipment information transmitting unit 102. The application for using equipment includes an identifier for identifying the user 21 and an identifier for identifying the equipment. The equipment application receiving unit 103 transmits the application for using equipment (specifically, the identifier for identifying the user 21 and the identifier for identifying the equipment) to the locker control apparatus 12.

### Application for Using Equipment

The application for using equipment is described below. The application for using equipment may be an application for requesting to start using the equipment immediately after the application is made. Alternatively, the application for using equipment may be an application for requesting to start using the equipment at the date and time specified by the user 21 (that is, an application for the booking of the use of the equipment made in advance).

For example, the application for using a seat is an application for requesting to start using the seat immediately after the application is made (in the case where an application for the reservation of the use of the seat is made in advance), and the application for using equipment is an application for requesting to start using the equipment immediately after the application is made.

For example, the application for using a seat is an application for requesting to start using the seat immediately after the application is made (in the case where an application for the reservation of the use of the seat is not made in advance), and the application for using equipment is an application for requesting to start using the equipment immediately after the application is made.

For example, the application for using a seat is an application for requesting to start using the seat at the date and time specified by the user 21 (that is, an application for the reservation of the use of the seat made in advance), and the application for using equipment is an application for requesting to start using the equipment at the date and time specified by the user 21 (that is, an application for the booking of the use of the equipment made in advance).

When the equipment application receiving unit 103 receives the application for using equipment, the unlocking information transmitting unit (also referred to as an equipment usage information transmitting unit) 104 transmits, to the information processing terminal 20, unlocking information (an example of information for using the equipment) of the locker where the equipment for which the application for using equipment is made is stored.

For example, the unlocking information transmitting unit 104 transmits, to the information processing terminal 20, a notification indicating the completion of the reception of the application for using equipment received by the equipment application receiving unit 103 and unlocking information of the locker where the equipment for which the application for using equipment is made is stored. Examples of the notification indicating the completion of the reception of the application for using equipment include a notification indicating that the equipment becomes available and a notification indicating that the booking for the use of the equipment is completed. Specifically, the unlocking information transmitting unit 104 receives the unlocking information of the locker from the locker control apparatus 12 and transmits the unlocking information to the information processing terminal 20.

The unlocking information transmitting unit 104 may transmit the unlocking information to the information processing terminal 20 immediately after the equipment application receiving unit 103 receives the application for using equipment, or may transmit the unlocking information to the information processing terminal 20 when the use of the seat actually starts. For example, in the case where the application for using a seat is an application for requesting to start using the seat at the date and time specified by the user 21 and the application for using equipment is an application for requesting to start using the equipment at the date and time specified by the user 21, the unlocking information transmitting unit 104 may transmit the unlocking information to the information processing terminal 20 when the use of the seat starts (for example, in response to receiving, from the information processing terminal 20, a result obtained by the information processing terminal 20 reading the QR CODE or the like of the seat).

### Unlocking Information

The unlocking information is described below. The unlocking information is any one of a one-dimensional code, a two-dimensional code, and a character string including at least one of letters, numbers, or symbols.

In response to a request from the information processing terminal 20, the usage status managing unit 105 transmits, to the information processing terminal 20, the usage status of the seat being used by the user 21 (that is, information indicating whether the user 21 is using a seat and the seat that the user 21 is using) and the usage status of the equipment being used by the user 21 (that is, information indicating whether the user 21 is using equipment and the equipment that the user 21 is using).

The unreturned equipment notifying unit 106 transmits information on the unreturned equipment of the user 21 to the information processing terminal 20 periodically (for example, at a predetermined closing time each day). The closing time may be set for an individual tenant (company) or for an individual user 21.

The equipment information synchronizing unit 107 synchronizes the equipment information (the equipment information stored in the equipment information storage unit 110) managed by the seat management apparatus 11 with the equipment information (the equipment information stored in the equipment information storage unit 123) managed by the locker control apparatus 12. Specifically, the equipment information synchronizing unit 107 requests the locker control apparatus 12 to transmit the equipment information, receives the equipment information from the locker control apparatus 12, and causes the equipment information storage unit 110 to store the equipment information.

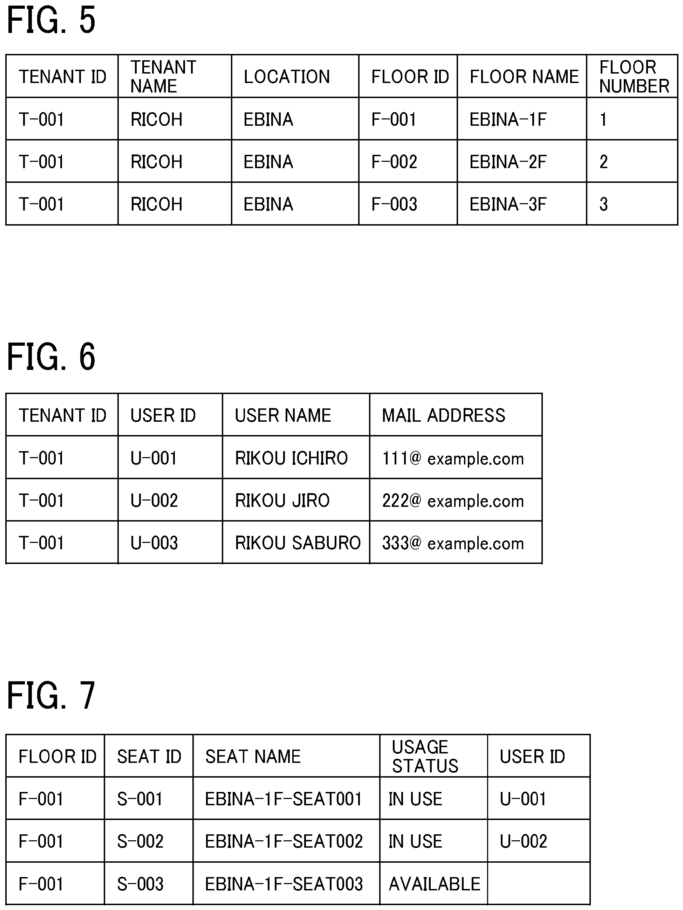

In the customer information storage unit 108, customer information that includes information on a tenant (e.g., a company) to which the user 21 belongs and information on the user 21 is stored. The details are described later with reference to FIGS. 5 and 6.

In the seat information storage unit 109, information on a seat installed in a tenant (e.g., a company) and the usage status of the seat (that is, information indicating whether the seat is in use) are stored. The details are described later with reference to FIG. 7.

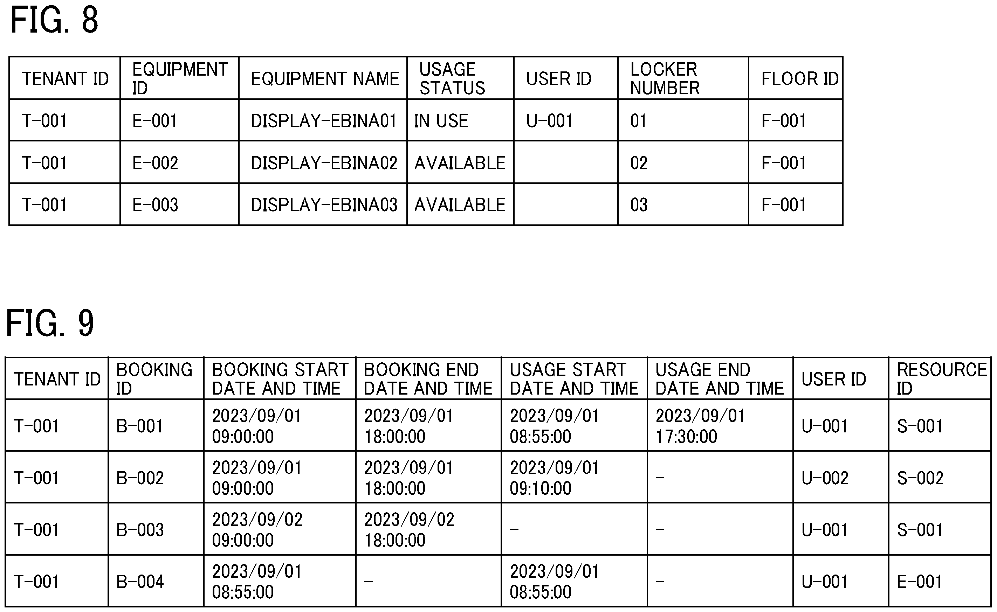

In the equipment information storage unit 110, information on equipment stored in a locker arranged in a tenant (e.g., a company) and the usage status of the equipment (that is, information indicating whether the equipment is in use) are stored. The details are described later with reference to FIG. 8.

In the usage information storage unit 111, usage information indicating the date and time when the use of the seat is reserved, the date and time when the seat is actually used, the date and time when the use of the equipment is booked, and the date and time when the equipment is actually used is stored. The details are described later with reference to FIG. 9.

The determination unit 112 determines whether the seat relating to the application for using a seat made by the user is available.

The creation unit 113 creates a list of identification information for identifying equipment when the application for using a seat made by the user is received.

### Locker Control Apparatus

The locker control apparatus 12 includes an equipment management unit 121, a lock control unit 122, and an equipment information storage unit 123. By executing programs, the locker control apparatus 12 performs the respective functions of the equipment management unit 121 and the lock control unit 122.

The equipment management unit 121 manages information on equipment stored in a locker arranged in a tenant (e.g., a company) and the usage status of the equipment (that is, information indicating whether the equipment is in use). Specifically, in response to receiving an application for using equipment (more specifically, the identifier for identifying the user 21 and the identifier for identifying the equipment) from the seat management apparatus 11, the equipment management unit 121 updates the data stored in the equipment information storage unit 123 (for example, changes the data in the "usage status" in the equipment information storage unit 123 to "in use").

Also, the equipment management unit 121 transmits the equipment information stored in the equipment information storage unit 123 to the seat management apparatus 11 in response to a request from the seat management apparatus 11.

The lock control unit 122 controls the unlocking and locking of the locker. Specifically, in response to receiving an application for using equipment (more specifically, the identifier for identifying the user 21 and the identifier for identifying the equipment) from the seat management apparatus 11, the lock control unit 122 generates unlocking information (for example, a passcode) of the locker in which the equipment is stored and transmits the unlocking information to the seat management apparatus 11. Also, the lock control unit 122 receives, from the locker 32, the unlocking information (for example, the passcode input to the locker 32 by the user 21) acquired by the locker 32, and unlocks the locker in the case where the unlocking information is identical to the unlocking information transmitted to the information processing terminal 20 of the user 21 via the seat management apparatus 11.

In the equipment information storage unit 123, information on equipment stored in a locker arranged in a tenant (e.g., a company) and the usage status of the equipment (that is, information indicating whether the equipment is in use) are stored.

The information stored in each storage unit is described below with reference to FIGS. 5 to 9.

In FIGS. 5 and 6, the customer information stored in the customer information storage unit 108 according to the present embodiment is illustrated.

FIG. 5 is a diagram illustrating the customer information (information on a tenant). The information on a tenant includes a "tenant ID," a "tenant name," a "location," a "floor ID," a "floor name," and a "floor number" of an individual tenant (e.g., a company).

The "tenant ID" is an identifier for identifying a tenant.

The "tenant name" is the name of the tenant (e.g., the company name).

The "location" is the location (e.g., the building) where the tenant is located.

The "floor ID" is an identifier for identifying an individual floor included in the tenant.

The "floor name" is the name (e.g., the location and floor number) of an individual floor included in the tenant.

The "floor number" is the number indicating an individual floor included in the tenant.

FIG. 6 is a diagram illustrating the customer information (information on a user). The information on the user 21 includes a "tenant ID," a "user ID," a "user name," and an "e-mail address" of an individual user 21.

The "tenant ID" is an identifier for identifying a tenant to which the user 21 belongs.

The "user ID" is an identifier for identifying the user 21. The user ID may be an e-mail address.

The "user name" is the name of the user 21.

The "e-mail address" is the e-mail address of the user 21. The information on the unreturned equipment of the user 21 is transmitted to the e-mail address of the user 21 stored in the "e-mail address."

FIG. 7 is a diagram illustrating the information on a seat (information stored in the seat information storage unit 109). The information on a seat includes a "floor ID," a "seat ID," a "seat name," a "usage status," and a "user ID" of each seat.

The "floor ID" is an identifier for identifying a floor on which the seat is installed.

The "seat ID" is an identifier for identifying the seat.

The "seat name" is the name of the seat (for example, the location, the floor number, and the seat number).

The "usage status" indicates whether the seat is in use (in other words, whether the seat is available).

The "user ID" is the user ID of the user 21 who is using the seat.

FIG. 8 is a diagram illustrating the equipment information (information stored in the equipment information storage unit 110). The equipment information includes a "tenant ID," an "equipment ID," an "equipment name," a "usage status," a "user ID," a "locker number," and a "floor ID" of each piece of equipment. The same applies to the equipment information stored in the equipment information storage unit 123.

The "tenant ID" is an identifier for identifying a tenant where a locker in which the equipment is stored is installed.

The "equipment ID" is an identifier for identifying the equipment. The equipment ID is an example of identification information for identifying equipment.

The "equipment name" is the name of the equipment (for example, the type and location of the equipment, and the equipment number). The equipment name is an example of identification information for identifying equipment.

The "usage status" indicates whether the equipment is in use (in other words, whether the equipment is available).

The "user ID" is the user ID of the user 21 who is using the equipment.

The "locker number" is the number of the locker in which the equipment is stored. The locker number is an example of information for identifying a locker.

The "floor ID" is an identifier for identifying a floor where a locker in which the equipment is stored is installed.

FIG. 9 is a diagram illustrating the usage information (information stored in the usage information storage unit 111). The usage information includes a "tenant ID," a "booking ID," a "booking start date and time," a "booking end date and time," a "usage start date and time," a "usage end date and time," a "user ID," and a "resource ID" of an individual resource (a seat or equipment).

The "tenant ID" is an identifier for identifying a tenant that owns a resource (a seat or equipment).

The "booking ID" is an identifier for identifying a booking that is assigned to an individual booking of a resource (a seat or equipment).

The "booking start date and time" is the date and time when the use of the booked resource (a seat or equipment) starts.

The "booking end date and time" is the date and time when the use of the booked resource (a seat or equipment) ends.

The "usage start date and time" is the actual date and time when the use of the resource (a seat or equipment) starts.

The "usage end date and time" is the actual date and time when the use of the resource (a seat or equipment) ends. The usage end date and time is not limited to the actual date and time when the use of the resource ends. As the usage end date and time, a scheduled usage end date and time of the resource, or both the actual usage end date and time of the resource and the scheduled usage end date and time of the resource may be stored and managed.

In the case where the use of the seat starts without a booking in advance, the same date and time is registered as the booking start date and time and the usage start date and time (in other words, the use is considered to have started at the same time when the booking is made). In this case, a default booking time (e.g., eight hours later) is registered as the booking end date and time, or the end date and time input by the user 21 on the screen displayed when the use of the seat stats is registered as the booking end date and time.

The "user ID" is an identifier for identifying the user 21 who is using the resource (a seat or equipment).

The "resource ID" is an identifier for identifying the resource (a seat or equipment).

In the case where applications for using a seat and equipment are made, the same booking start date and time of the seat and the same booking end date and time of the seat may be reflected to the usage start date and time of the equipment and the usage end date and time of the equipment, respectively. The usage start date and time of the equipment may reflect the date and time when the locker is unlocked. Also, the usage end date and time of the equipment may reflect the date and time when the equipment is returned.

### Method

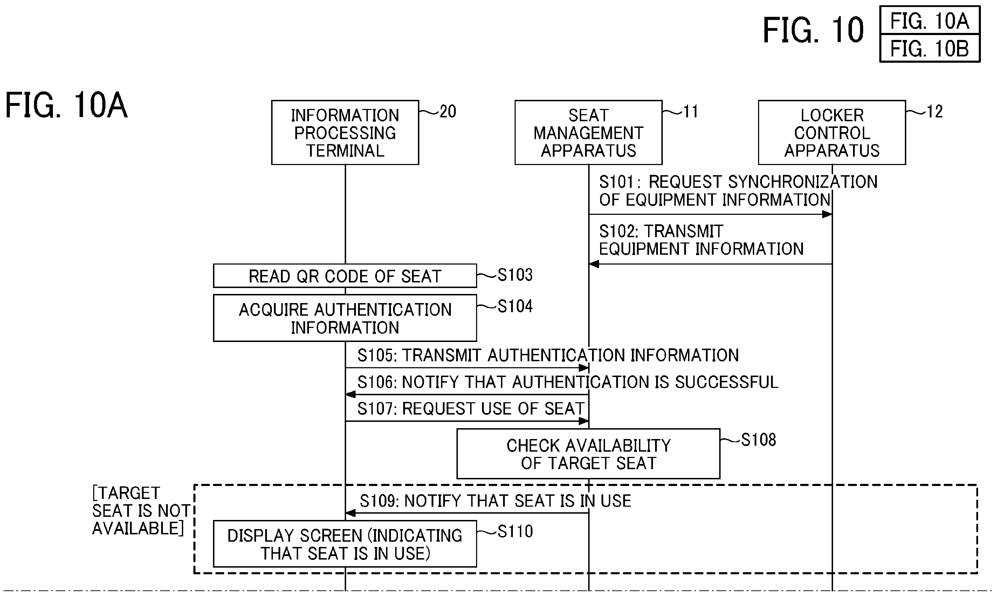

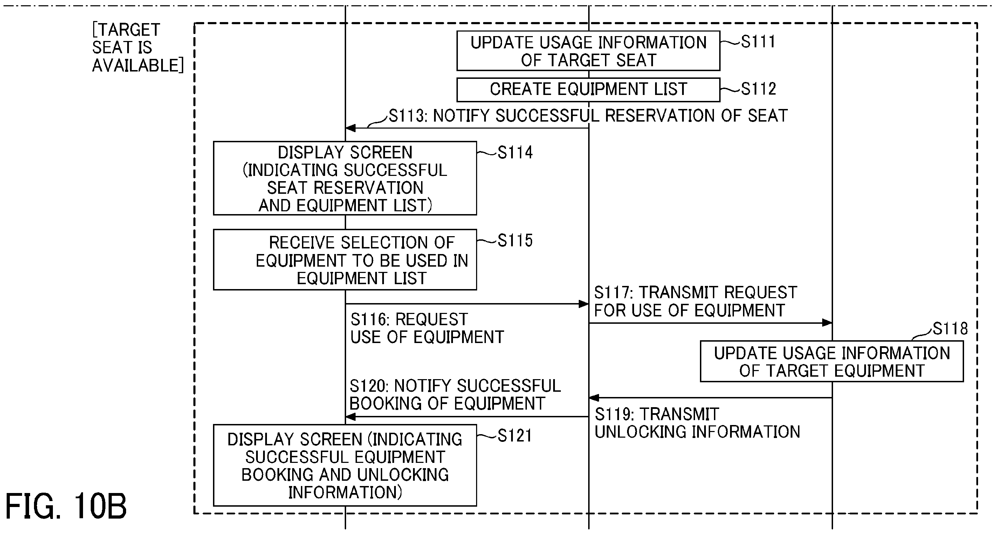

FIG. 10 (FIGS. 10A and 10B) is a sequence diagram illustrating the process for making applications for using a seat and equipment.

In step S101, the seat management apparatus 11 transmits a request for synchronizing the equipment information to the locker control apparatus 12.

In step S102, the locker control apparatus 12 transmits the equipment information to the seat management apparatus 11 in response to the request made in S 101.

It is assumed that the processes of steps S101 and S102 are constantly performed.

In step S103, the information processing terminal 20 reads, for example, a QR CODE attached to the seat. The QR CODE or the like includes an identifier of the seat 31 and access information to the seat management apparatus 11.

In step S104, the information processing terminal 20 acquires the authentication information (for example, an e-mail address and a password) input by the user 21. In the case where the authentication information has already been stored in the information processing terminal 20, the process of step S104 is omitted.

In step S105, the information processing terminal 20 transmits the authentication information acquired in S104 to the seat management apparatus 11.

In step S106, when the authentication is successful, the seat management apparatus 11 notifies the information processing terminal 20 that the authentication is successful.

In step S107, the information processing terminal 20 transmits a request for using the seat 31 whose identifier is included in the QR CODE or the like read in S103 to the seat management apparatus 11.

In step S108, the seat management apparatus 11 determines whether the seat for which the request for use is made in S107 is in use. The seat management apparatus 11 refers to the seat information storage unit 109 to determine whether the seat is in use. In the case where the seat is in use, the processes of steps S109 through S110 are performed. In the case where the seat is not in use, the processes of steps S111 through S121 are performed.

In step S109, the seat management apparatus 11 notifies the information processing terminal 20 that the seat is in use.

In step S 110, the information processing terminal 20 displays that the seat is in use.

In step S111, the seat management apparatus 11 refers to the seat information storage unit 109 and changes the data in the "usage status" of the seat for which the request for use is made in S107 to "in use."

In step S112, the seat management apparatus 11 creates information on the equipment (e.g., a list of equipment) available for the user 21 who uses the seat for which the request for use is made in S107. For example, the seat management apparatus 11 creates a list of equipment whose usage status is "available" among the pieces of information on the equipment stored in the equipment information storage unit 110. For example, the seat management apparatus 11 may create a list of equipment associated with the floor where the seat relating to the request for using a seat made in S107 is installed, or may create a list of equipment associated with the seat.

In step S113, the seat management apparatus 11 transmits a notification indicating the completion of the reception of the application for using a seat and the equipment information created in S112 to the information processing terminal 20.

In step S114, the information processing terminal 20 displays the notification indicating the completion of the reception of the application for using a seat and the equipment information.

In step S115, the information processing terminal 20 receives an instruction to select equipment to be used by the user 21 from the equipment information displayed in S114.

In the case where the instruction to select equipment is not received in step S115 (in other words, in the case where the user does not make an application for using equipment), the process ends.

In step S116, the information processing terminal 20 transmits a request for using the equipment selected in S115 to the seat management apparatus 11.

In step S117, the seat management apparatus 11 transmits the identifier of the user 21 identified by the authentication information and the identifier of the equipment to the locker control apparatus 12.

In step S118, the locker control apparatus 12 refers to the equipment information storage unit 123 and changes the data in the "usage status" of the equipment whose identifier is transmitted in S117 to "in use."

In step S119, the locker control apparatus 12 generates unlocking information (e.g., a passcode) of the locker in which the equipment is stored, and transmits the unlocking information to the seat management apparatus 11. The locker control apparatus 12 may transmit the unlocking information stored in association with the locker number for identifying the locker in which the equipment is stored, instead of generating the unlocking information.

In step S120, the seat management apparatus 11 transmits, to the information processing terminal 20, a notification indicating the completion of the reception of the application for using equipment and the unlocking information (e.g., a passcode) of the locker in which the equipment is stored.

In step S121, the information processing terminal 20 displays the notification indicating the completion of the reception of the application for using equipment and the unlocking information (e.g., a passcode) of the locker in which the equipment is stored.

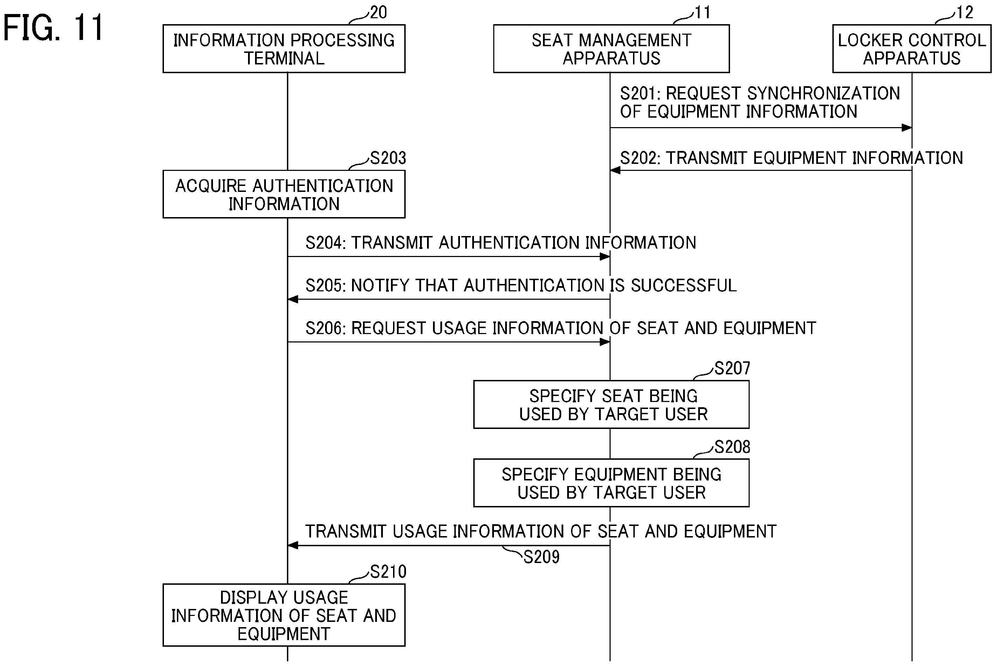

FIG. 11 is a sequence diagram illustrating the process for displaying the usage status.

In step S201, the seat management apparatus 11 transmits a request for synchronizing the equipment information to the locker control apparatus 12.

In step S202, the locker control apparatus 12 transmits the equipment information to the seat management apparatus 11 in response to the request made in S201.

It is assumed that the processes of steps S201 and S202 are constantly performed.

In step S203, the information processing terminal 20 acquires the authentication information (for example, an e-mail address and a password) input by the user 21. In the case where the authentication information has already been stored in the information processing terminal 20, the process of step S203 is omitted.

In step S204, the information processing terminal 20 transmits the authentication information acquired in S203 to the seat management apparatus 11.

In step S205, when the authentication is successful, the seat management apparatus 11 notifies the information processing terminal 20 that the authentication is successful.

In step S206, the information processing terminal 20 transmits a request for the usage status of the seat and the equipment to the seat management apparatus 11.

In step S207, the seat management apparatus 11 refers to the usage information storage unit 111 to specify the seat being used by the user 21 identified by the authentication information.

In step S208, the seat management apparatus 11 refers to the usage information storage unit 111 to specify the equipment being used by the user 21 identified by the authentication information.

The processes of steps S207 and S208 may be performed in the reverse order or simultaneously.

In step S209, the seat management apparatus 11 transmits the usage status of the seat and equipment being used by the user 21 specified in S207 and S208, respectively, to the information processing terminal 20.

In step S210, the information processing terminal 20 displays the usage status of the seat and equipment being used by the user 21.

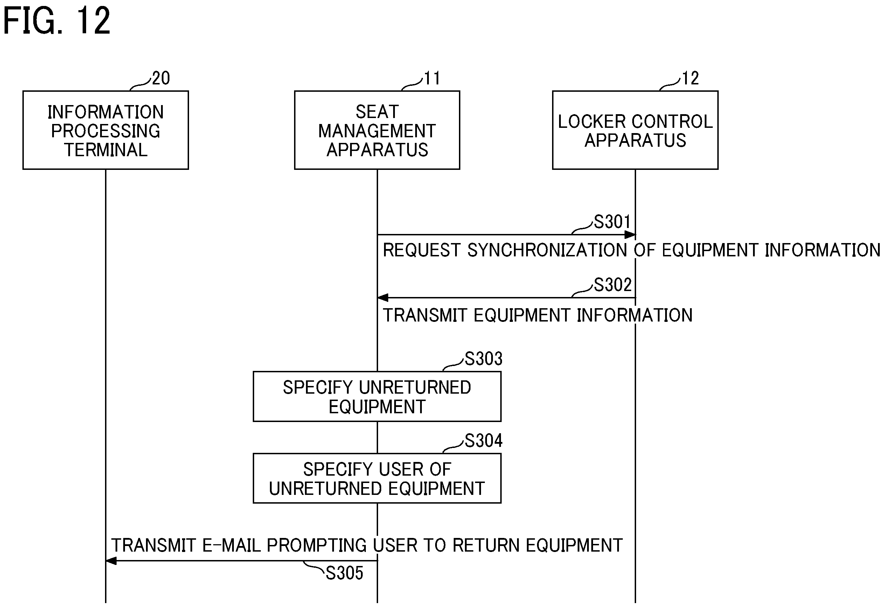

FIG. 12 is a sequence diagram illustrating a notification process of unreturned equipment.

In step S301, the seat management apparatus 11 transmits a request for synchronizing the equipment information to the locker control apparatus 12.

In step S302, the locker control apparatus 12 transmits the equipment information to the seat management apparatus 11 in response to the request made in S301.

It is assumed that the processes of steps S301 and S302 are constantly performed.

In step S303, the seat management apparatus 11 refers to the equipment information storage unit 110 to specify unreturned equipment.

In step S304, the seat management apparatus 11 identifies the user 21 who is using the unreturned equipment.

In step S305, the seat management apparatus 11 transmits, to the user 21 specified in S304, an e-mail prompting the user 21 to return the unreturned equipment.

### Screen

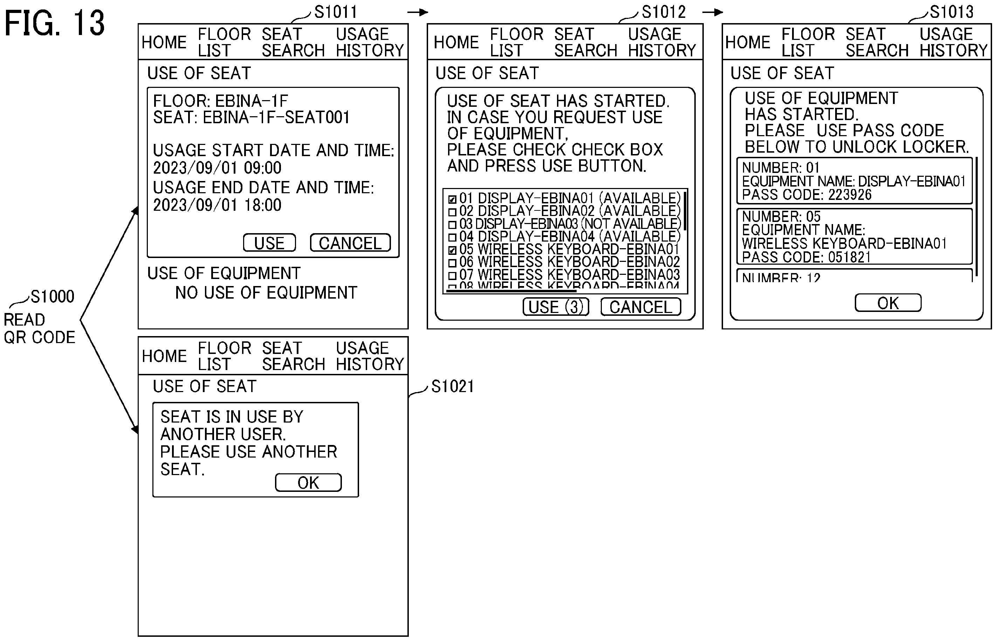

FIG. 13 is a diagram illustrating the transition of a screen used for making applications for using a seat and equipment.

In step S1000, the information processing terminal 20 is considered to have read the QR CODE attached to the seat 31. In the case where the seat 31 is not used by any user, the process proceeds to step S1011. In the case where the seat 31 is already used by another user, the process proceeds to step S1021.

In step S1011, the information on the seat is displayed. In response to an instruction to start using the seat on the screen displayed in S1001, the process proceeds to step S1012.

In step S1012, a list of equipment available for the user 21 is displayed. When the user 21 selects equipment, the process proceeds to step S1013.

In step S1013, a notification indicating the completion of the reception of the application for using the equipment selected in S1012 and the passcode for unlocking the locker are displayed.

In step S1021, a notification indicating that the seat is being used by another user is displayed.

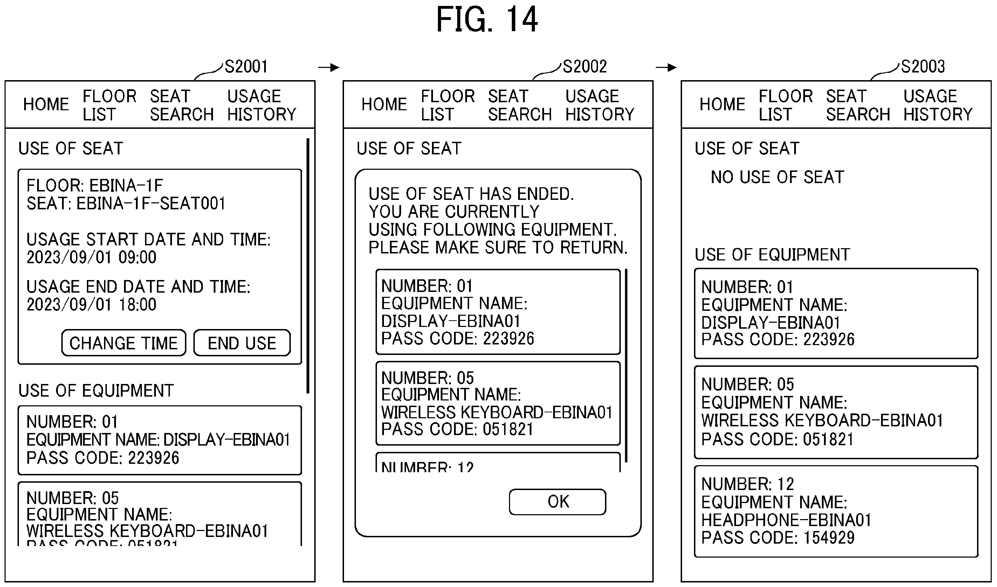

FIG. 14 is a diagram illustrating the transition of a screen used for ending the use of a seat and equipment.

In step S2001, the usage status of the seat and equipment being used by the user 21 is displayed. In response to an instruction to end using the seat on the screen displayed in S2001, the process proceeds to a screen to be displayed in step S2002.

In step S2002, when the reception of the application for requesting to end the use of the seat is completed, a screen for prompting the user 21 to return the equipment being used by the user 21 (i.e., the unreturned equipment) is displayed. When the user 21 selects the OK button, the process proceeds to a screen to be displayed in step S2003.

In step S2003, the equipment being used by the user 21 is displayed.

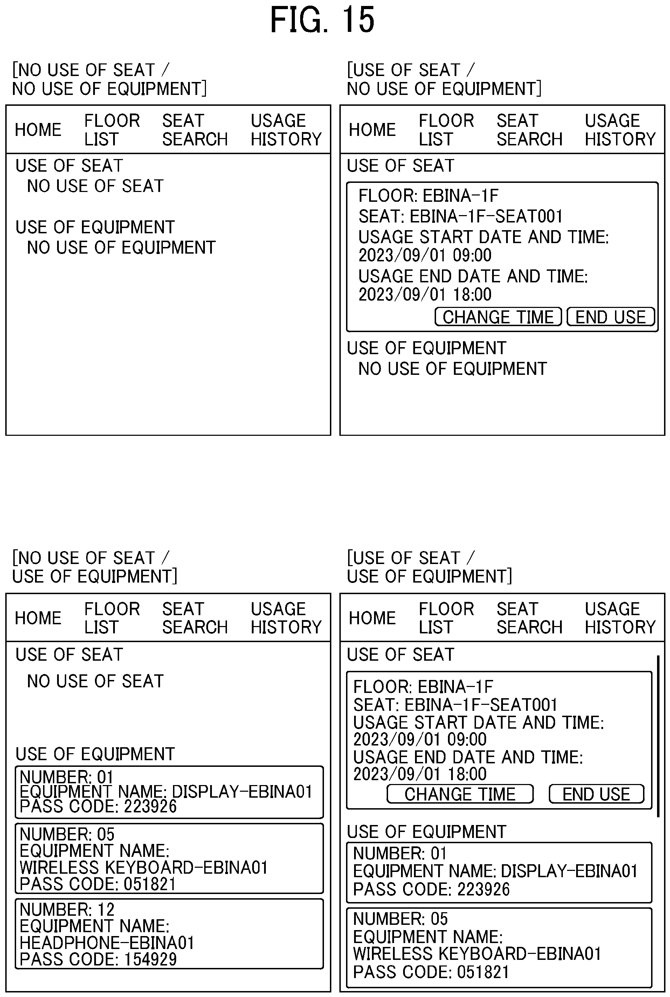

FIG. 15 is a diagram illustrating each screen presenting the usage status.
1) The "no use of seat / no use of equipment" is a screen displayed when the user 21 is not using a seat and is not using equipment.
2) The "use of seat / no use of equipment" is a screen displayed when the user 21 is using a seat and is not using equipment. For example, the name of the floor where the seat is being used, the seat name, the usage start date and time, and the usage end date and time (or scheduled usage end date and time) are displayed.
3) The "no use of seat / use of equipment" is a screen displayed when the user 21 is not using a seat and is using equipment. For example, the locker number of the equipment being used, the equipment name, and the passcode for unlocking the locker are displayed.
4) The "use of seat / use of equipment" is a screen displayed when the user 21 is using a seat and is using equipment. For example, the name of the floor where the seat is being used, the seat name, the usage start date and time, the usage end date and time (scheduled usage end date and time), the locker number of the equipment being used, the equipment name, and the passcode for unlocking the locker are displayed.

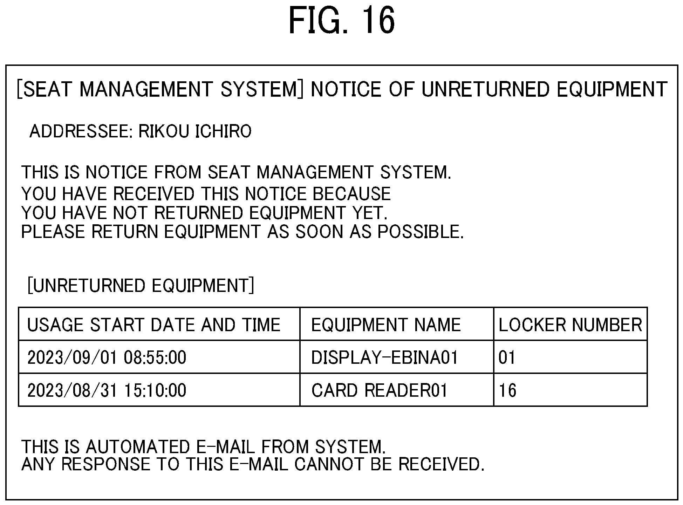

FIG. 16 is a diagram illustrating a screen presenting a notification of unreturned equipment. The information processing apparatus 10 can periodically (for example, at a predetermined closing time each day) transmit an e-mail indicating information on the unreturned equipment of the user 21 as illustrated in FIG. 16 to the e-mail address of the user 21. The information on the unreturned equipment includes, for example, the usage start date and time of the unreturned equipment, the equipment name, and the locker number. The user 21 can immediately notice in the case where the equipment has not been returned even after the predetermined time (e.g., the closing time).

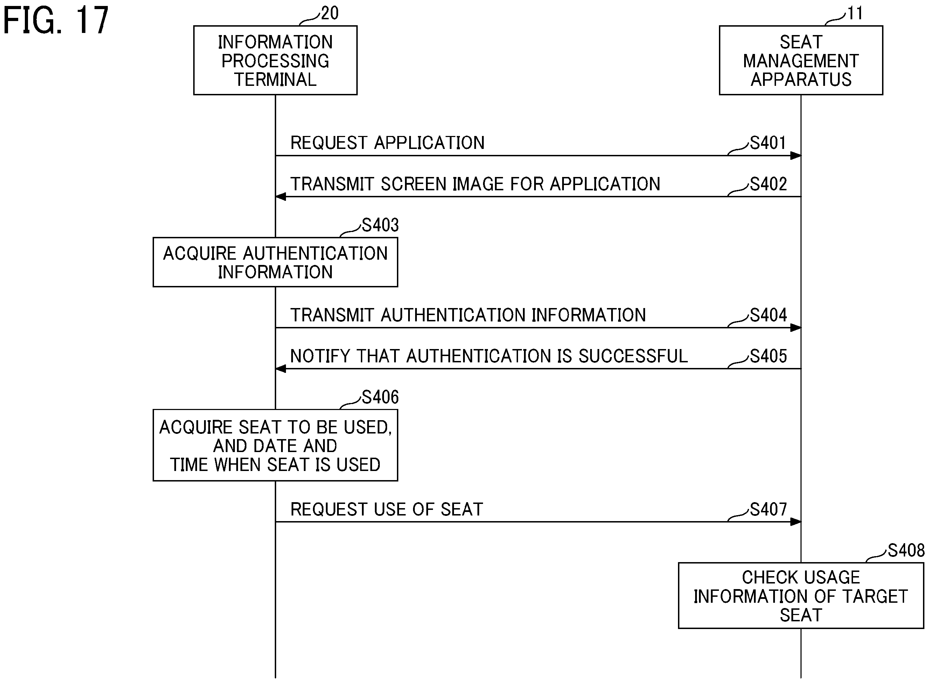

FIG. 17 is a sequence diagram illustrating the case where a seat and equipment are booked in advance.

In step S401, the information processing terminal 20 transmits a request for making applications for booking a seat and equipment in advance to the seat management apparatus 11.

In step S402, the seat management apparatus 11 transmits a screen image used for making applications for booking a seat and equipment to the information processing terminal 20.

In step S403, the information processing terminal 20 acquires the authentication information (for example, an e-mail address and a password) input by the user 21. In the case where the authentication information has already been stored in the information processing terminal 20, the process of step S403 is omitted.

In step S404, the information processing terminal 20 transmits the authentication information acquired in S403 to the seat management apparatus 11.

In step S405, when the authentication is successful, the seat management apparatus 11 notifies the information processing terminal 20 that the authentication is successful.

In step S406, the information processing terminal 20 acquires information on the seat to be used that is selected by the user 21 and the date and time when the seat is used that is input by the user 21.

In step S407, the information processing terminal 20 transmits, to the seat management apparatus 11, a request for using the seat selected in S406 on the date and time input in S406.

In step S408, the seat management apparatus 11 checks the usage information on the seat requested to be used in S407 (whether the seat has already been reserved). Subsequently, an application for booking the equipment is made in the same manner as the application is made in S109 through S121 in FIG. 10 (FIGS. 10A and 10B).

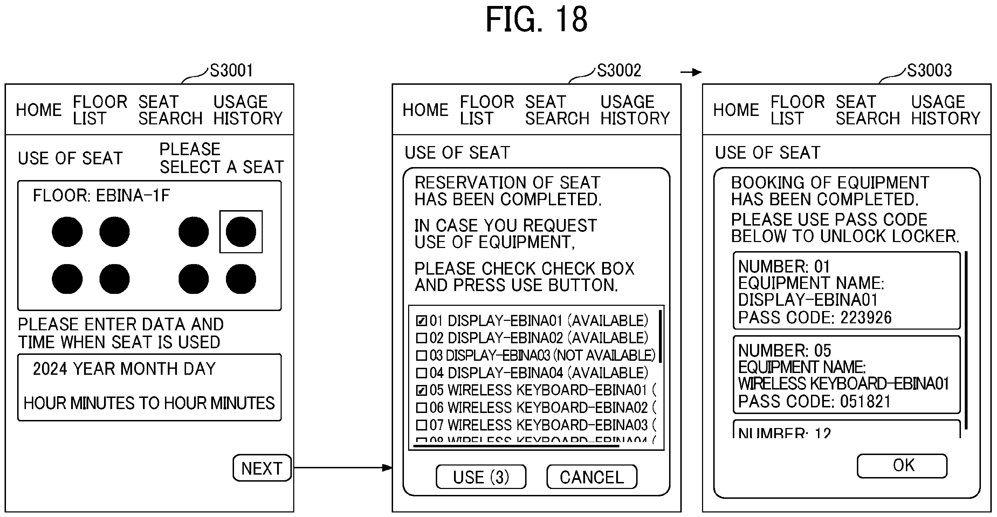

FIG. 18 is a diagram illustrating a user interface used in the case where a seat and equipment are booked in advance.

In step S3001, a screen for selecting a seat to be reserved and inputting a date and time when the seat is reserved is displayed. When a seat is selected and the date and time is input on the screen displayed in S3001, the process proceeds to step S3002.

In step S3002, a notification indicating that the reservation of the seat selected in S3001 is completed and a list of equipment available for the user 21 are displayed. When the user 21 selects equipment, the process proceeds to step S3003.

In step S3003, a notification indicating the completion of the booking of the equipment selected in S3002 and the passcode for unlocking the locker are displayed.

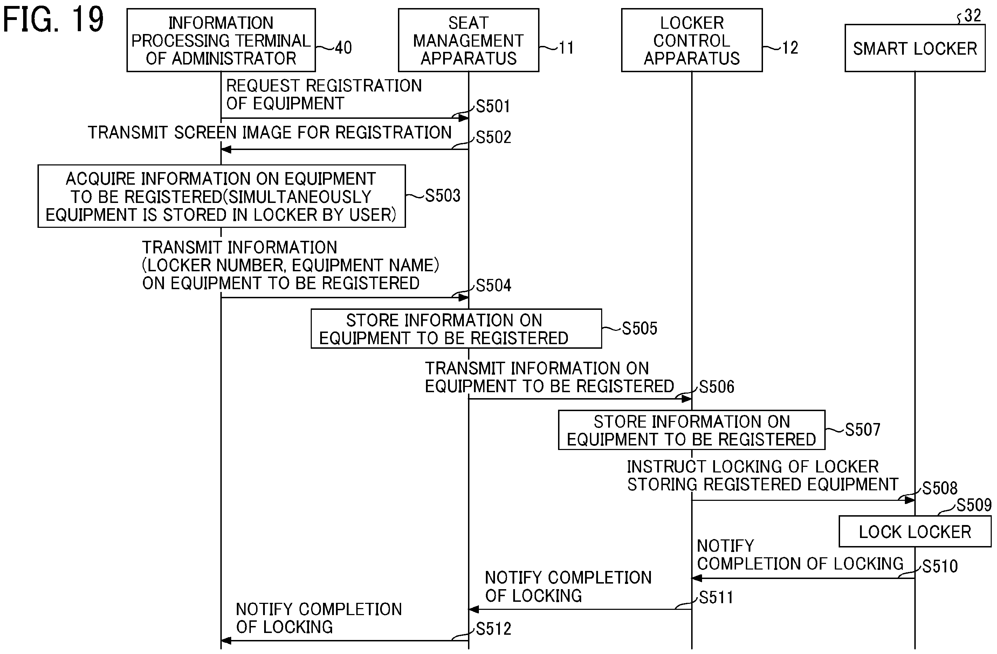

FIG. 19 is a sequence diagram illustrating the process for registering equipment.

In step S501, an information processing terminal 40 of an administrator transmits a request for registering equipment to the seat management apparatus 11.

In step S502, the seat management apparatus 11 transmits a screen image used for registering the equipment to the information processing terminal 40 of the administrator.

In step S503, the information processing terminal 40 of the administrator acquires the information on the equipment to be registered that is input by an operator (the administrator). Substantially at the same time, the operator (administrator) stores the equipment in the locker.

In step S504, the information processing terminal 40 of the administrator transmits, to the seat management apparatus 11, the information (e.g., the locker number, the equipment name) on the equipment to be registered that is input in S503.

In step S505, the seat management apparatus 11 causes the information on the equipment to be registered to be stored.

In step S506, the seat management apparatus 11 transmits the information on the equipment to be registered to the locker control apparatus 12.

In step S507, the locker control apparatus 12 causes the information on the equipment to be registered to be stored.

In step S508, the locker control apparatus 12 instructs the smart locker 32 in which the registered equipment is stored to lock.

In step S509, the smart locker 32 locks.

In step S510, the smart locker 32 notifies the locker control apparatus 12 of the completion of the locking.

In step S511, the locker control apparatus 12 notifies the seat management apparatus 11 of the completion of the locking.

In step S512, the seat management apparatus 11 notifies the information processing terminal 40 of the administrator of the completion of the locking.

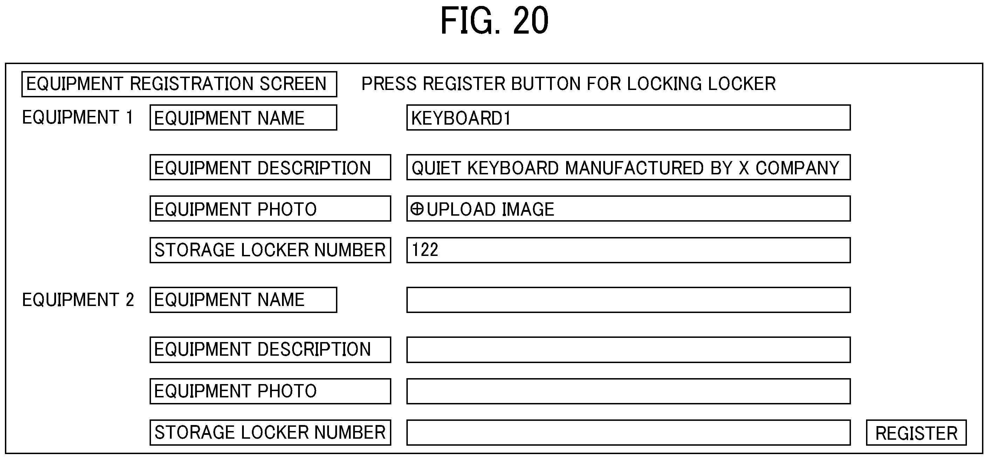

FIG. 20 is a diagram illustrating a user interface used for registering the equipment. As illustrated in FIG. 20, a screen for registering an "equipment name," an "equipment description," an "equipment photo," and a "storage locker number" of each piece of equipment is displayed. When a register button is pressed, the locker is locked.

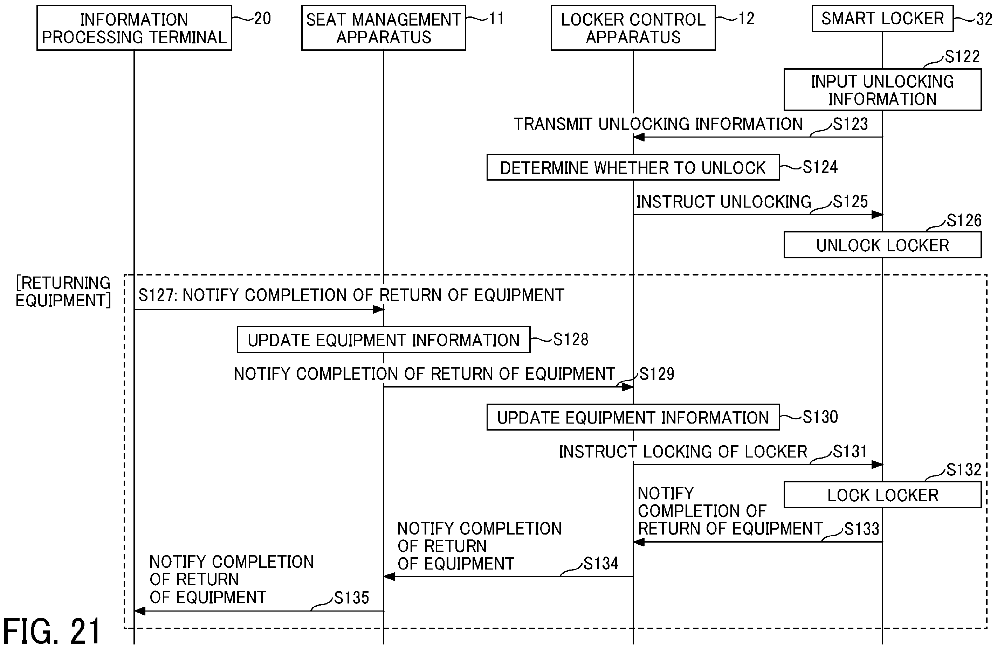

FIG. 21 is a sequence diagram illustrating the process for transmitting the unlocking information and returning the unreturned equipment. The process is performed subsequent to the process of S121 in FIG. 10 (FIGS. 10A and 10B).

In step S122, the unlocking information is input to the smart locker 32.

In step S123, the smart locker 32 transmits the unlocking information input in S122 to the locker control apparatus 12.

In step S124, the locker control apparatus 12 determines whether to unlock the smart locker 32.

In step S125, the locker control apparatus 12 instructs the smart locker 32 to unlock.

In step S126, the smart locker 32 unlocks.

When the equipment is returned, the processes of steps S127 through S135 are performed.

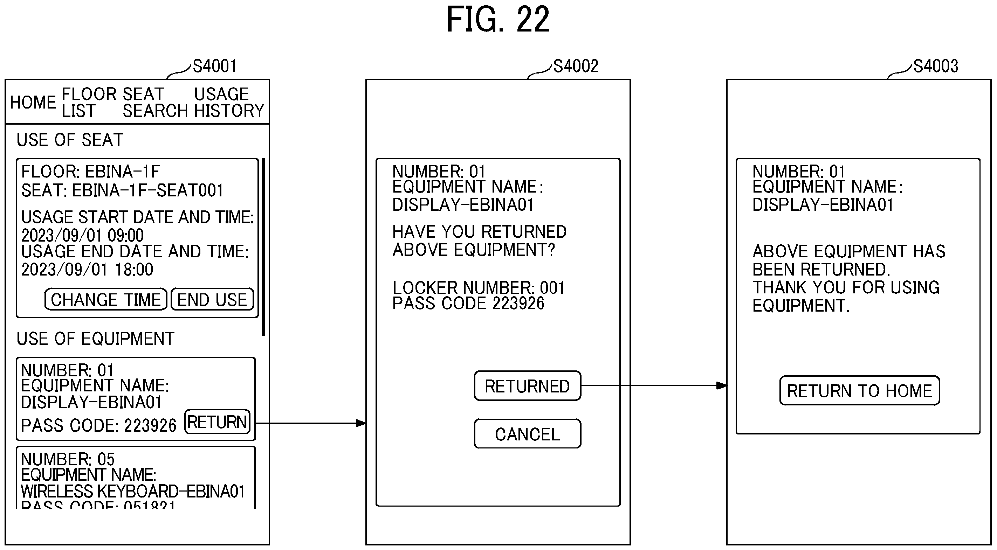

In step S127, the information processing terminal 20 notifies the seat management apparatus 11 of the completion of the return of the equipment. In response to an operation performed by the user to press a returned button in S4002 of FIG. 22, the process of S127 starts.

In step S128, the seat management apparatus 11 updates the equipment information.

In step S129, the seat management apparatus 11 notifies the locker control apparatus 12 of the completion of the return of the equipment.

In step S130, the locker control apparatus 12 updates the equipment information.

In step S131, the locker control apparatus 12 instructs the smart locker 32 to lock.

In step S132, the smart locker 32 locks. In response to the locking, the locker control apparatus 12 may change (update) the unlocking information of the smart locker 32.

In step S133, the smart locker 32 notifies the locker control apparatus 12 of the completion of the return of the equipment.

In step S134, the locker control apparatus 12 notifies the seat management apparatus 11 of the completion of the return of the equipment.

In step S135, the seat management apparatus 11 notifies the information processing terminal 20 of the completion of the return of the equipment.

FIG. 22 is a diagram illustrating a user interface used for returning the equipment.

In step S4001, the usage status of the seat and equipment being used by the user 21 is displayed. In response to an instruction to end using the equipment on the screen displayed in S4001, the process proceeds to a screen to be displayed in step S4002.

In step S4002, when the user 21 inputs that the user 21 has returned the equipment, the process proceeds to a screen to be displayed in step S4003.

In step S4003, when the equipment information is updated in the seat management apparatus 11 and the locker control apparatus 12, and the smart locker 32 locks, a notification indicating the completion of the return of the equipment is displayed.

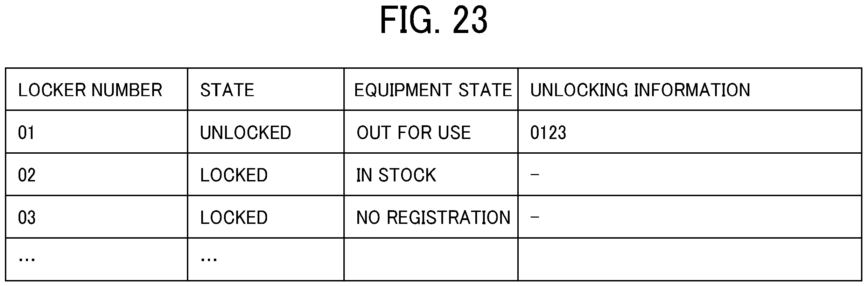

FIG. 23 is a diagram illustrating a table used for managing the unlocking information. A table that includes a "locker number," a "state," an "equipment state," and "unlocking information" is stored in the locker control apparatus 12.

The "locker number" is the number of the smart locker 32.

The "state" indicates whether the smart locker 32 is locked or unlocked.

The "equipment state" indicates whether the equipment is being lent, the equipment is being stored, or the equipment is not registered.

The "unlocking information" indicates unlocking information of the smart locker 32.

### Second Embodiment

In the second embodiment, a seat management apparatus manages equipment information.

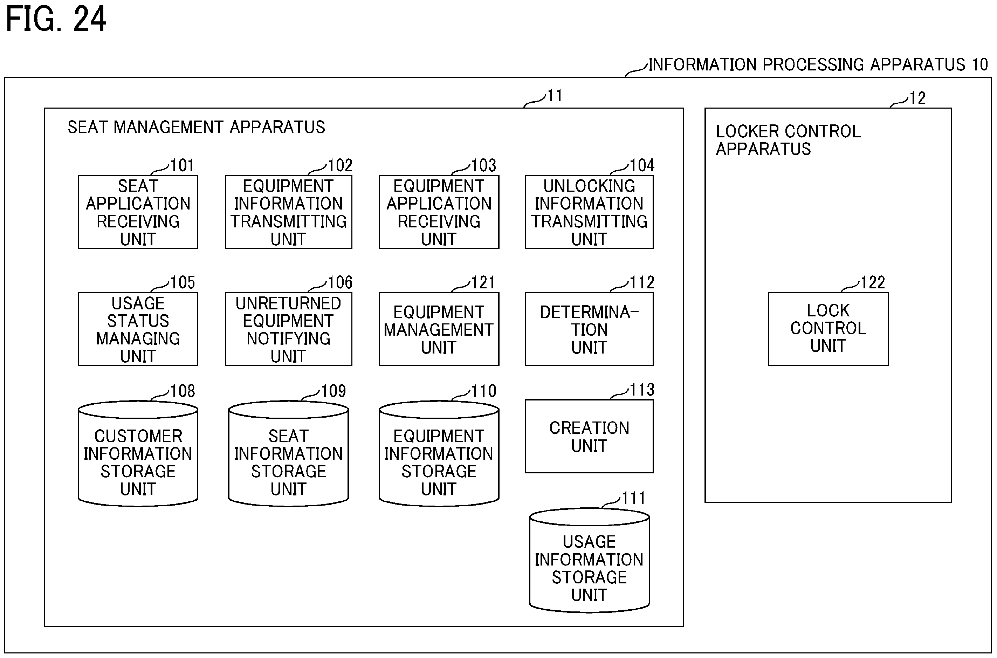

FIG. 24 is a block diagram illustrating a functional configuration of the information processing apparatus 10 according to the second embodiment. According to the second embodiment, the seat management apparatus 11 includes the seat application receiving unit 101, the equipment information transmitting unit 102, the equipment application receiving unit 103, the unlocking information transmitting unit 104, the usage status managing unit 105, the unreturned equipment notifying unit 106, the equipment management unit 121, the customer information storage unit 108, the seat information storage unit 109, the equipment information storage unit 110, the usage information storage unit 111, the determination unit 112, and the creation unit 113. The locker control apparatus 12 includes the lock control unit 122. Since the functions are substantially the same as those of the first embodiment, the descriptions thereof are omitted.

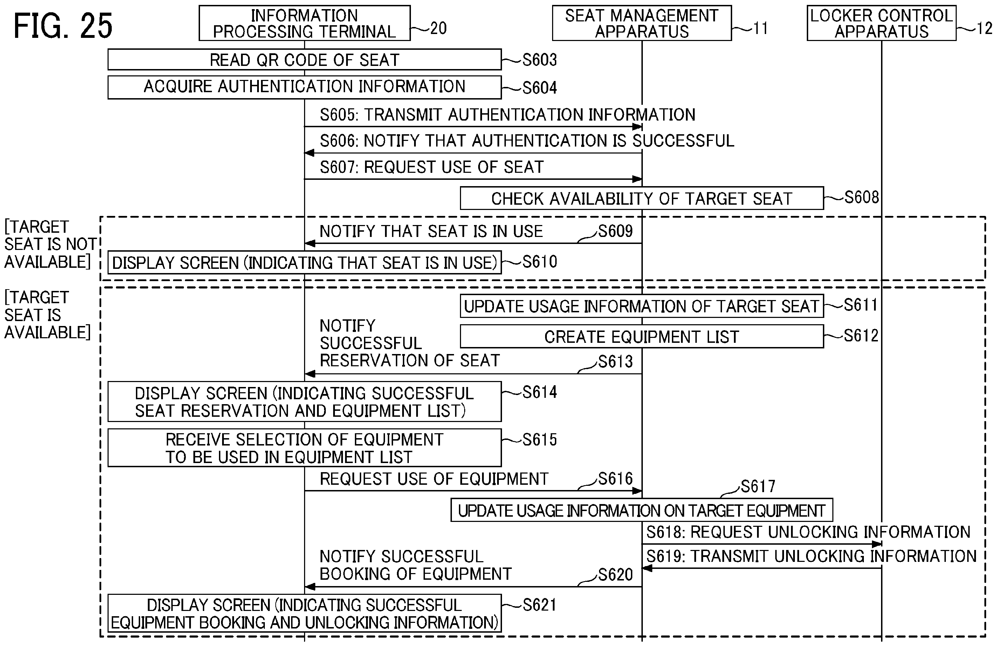

FIG. 25 is a sequence diagram illustrating the process for making applications for using a seat and equipment according to the second embodiment. Since the processes of steps S603 through S616 are substantially the same as the processes of steps S103 through S116 in FIG. 10 (FIGS. 10A and 10B), the descriptions thereof are omitted.

In step S617, the seat management apparatus 11 refers to the equipment information storage unit 123 and changes the data in the "usage status" of the equipment to "in use."

In step S618, the seat management apparatus 11 transmits a request for unlocking information to the locker control apparatus 12.

In step S619, the locker control apparatus 12 generates unlocking information (e.g., a passcode) of the locker in which the equipment is stored, and transmits the unlocking information to the seat management apparatus 11. The locker control apparatus 12 may transmit the unlocking information stored in association with the locker number for identifying the locker in which the equipment is stored, instead of generating the unlocking information.

In step S620, the seat management apparatus 11 transmits, to the information processing terminal 20, a notification indicating the completion of the reception of the application for using equipment and the unlocking information (e.g., a passcode) of the locker in which the equipment is stored.

In step S621, the information processing terminal 20 displays the notification indicating the completion of the reception of the application for using equipment and the unlocking information (e.g., a passcode) of the locker in which the equipment is stored.

### Third Embodiment

In the third embodiment, a locker management apparatus 13 in which the seat management apparatus 11 and the locker control apparatus 12 are integrated is used.

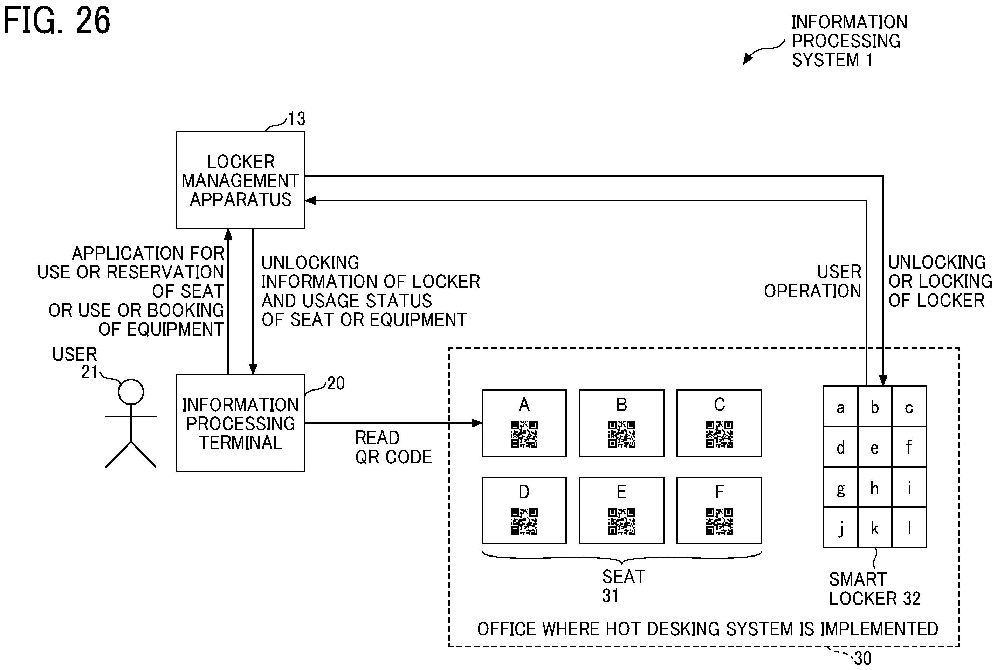

FIG. 26 is a diagram illustrating an overall configuration of the information processing system 1 according to the third embodiment. According to the third embodiment, the information processing system 1 includes the locker management apparatus (also referred to as a server apparatus) 13 and the information processing terminal (also referred to as a communication terminal) 20. The information processing system 1 manages the seats (e.g., the seats A to F in FIG. 26) 31 and the smart lockers (also referred to simply as the lockers) (e.g., the lockers a to l in FIG. 26) 32 installed in the office 30 where the hot desking system is implemented.

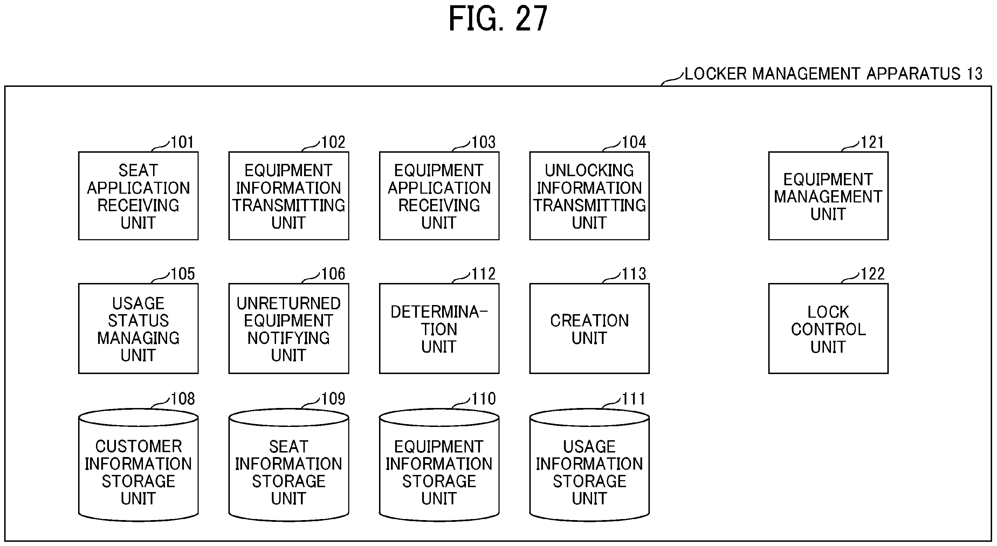

FIG. 27 is a block diagram illustrating a functional configuration of the locker management apparatus 13 according to the third embodiment.

According to the third embodiment, the locker management apparatus 13 includes the seat application receiving unit 101, the equipment information transmitting unit 102, the equipment application receiving unit 103, the unlocking information transmitting unit 104, the usage status managing unit 105, the unreturned equipment notifying unit 106, the customer information storage unit 108, the seat information storage unit 109, the equipment information storage unit 110, the usage information storage unit 111, the equipment management unit 121, the lock control unit 122, the determination unit 112, and the creation unit 113. Since the functions are substantially the same as those of the first embodiment, the descriptions thereof are omitted.

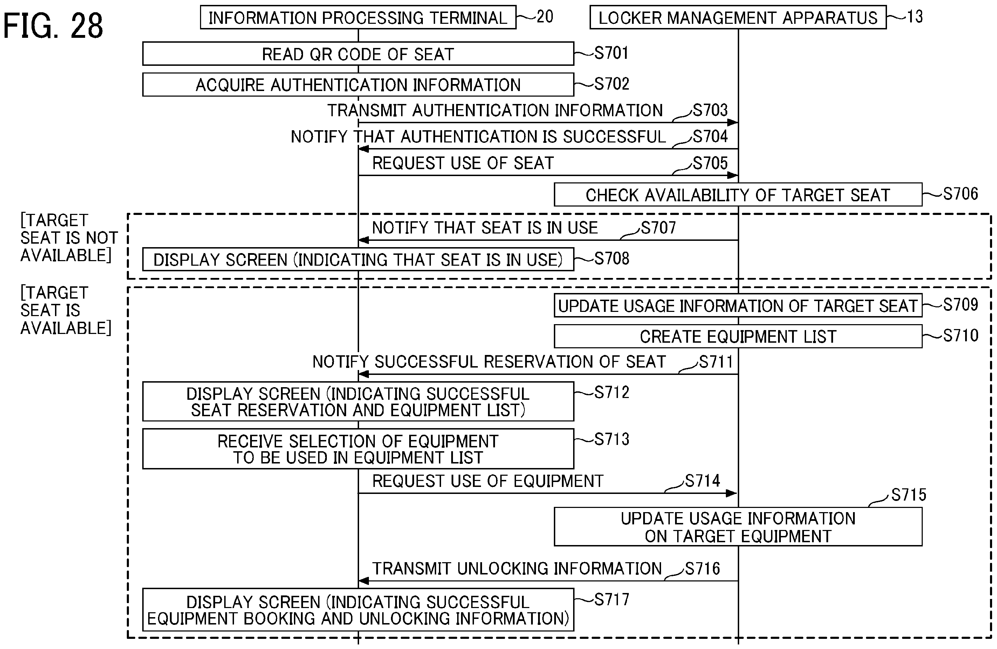

FIG. 28 is a sequence diagram illustrating the process for making applications for using a seat and equipment according to the third embodiment. Since the processes of steps S701 through S714 are substantially the same as the processes of steps S103 through S116 in FIG. 10 (FIGS. 10A and 10B), the descriptions thereof are omitted.

In step S715, the locker management apparatus 13 refers to the equipment information storage unit 123 and changes the data in the "usage status" of the equipment to "in use."

In step S716, the locker management apparatus 13 transmits, to the information processing terminal 20, a notification indicating the completion of the reception of the application for using equipment and the unlocking information (e.g., a passcode) of the locker in which the equipment is stored.

In step S717, the information processing terminal 20 displays the notification indicating the completion of the reception of the application for using equipment and the unlocking information (e.g., a passcode) of the locker in which the equipment is stored.

### Fourth Embodiment

In the fourth embodiment, applications for using a seat and equipment are made on the same screen.

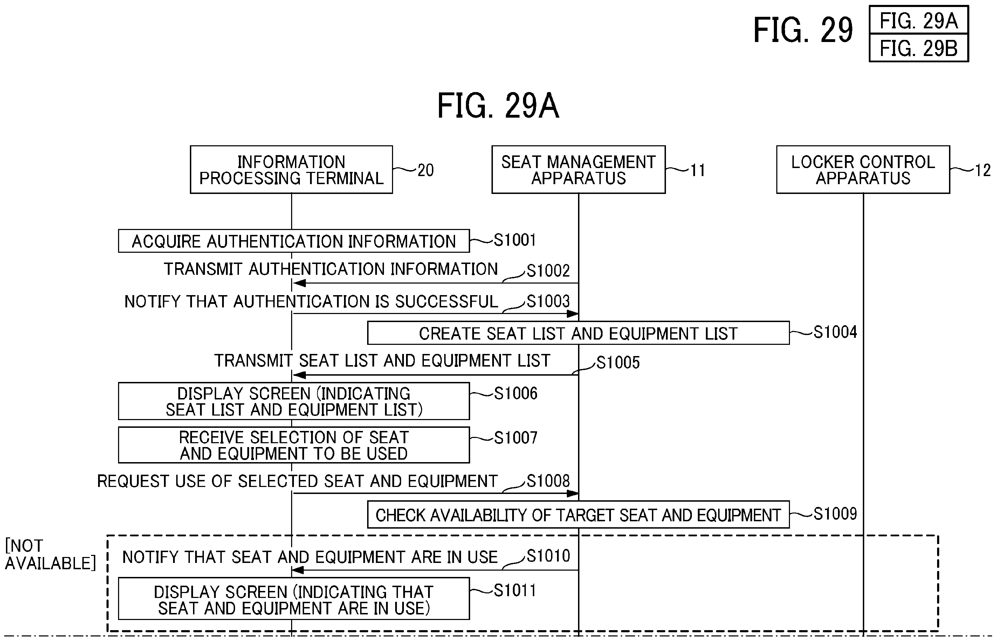

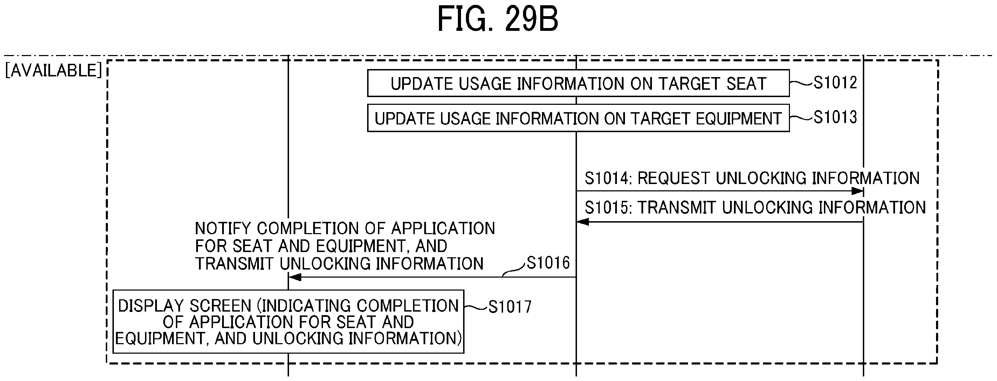

FIG. 29 (FIGS. 29A and 29B) is a sequence diagram illustrating the process for making applications for using a seat and equipment according to the fourth embodiment.

In step S1001, the information processing terminal 20 acquires the authentication information input by the user 21.

In step S1002, the seat management apparatus 11 transmits the authentication information to the information processing terminal 20.

In step S1003, when the authentication is successful, the information processing terminal 20 notifies the seat management apparatus 11 that the authentication is successful.

In step S1004, the seat management apparatus 11 creates a list of seats and a list of equipment.

In step S1005, the seat management apparatus 11 transmits the list of seats and the list of equipment to the information processing terminal 20.

In step S1006, the information processing terminal 20 displays the list of seats and the list of equipment.

In step S1007, the information processing terminal 20 receives an instruction to select a seat and equipment to be used by the user 21.

In step S1008, the information processing terminal 20 transmits a request for using the seat and the equipment selected in S1007 to the seat management apparatus 11.

In step S1009, the seat management apparatus 11 determines whether the seat and the equipment are in use. In the case where the seat and the equipment are in use, the processes of steps S1010 through S1011 are performed. In the case where the seat and the equipment are not in use, the processes of steps S1012 through S1017 are performed.

In step S1010, the seat management apparatus 11 notifies the information processing terminal 20 that the seat and the equipment are in use.

In step S1011, the information processing terminal 20 displays that the seat and the equipment are in use.

In step S1012, the seat management apparatus 11 changes the data in the "usage status" of the seat stored in the seat information storage unit 109 to "in use."

In step S1013, the seat management apparatus 11 changes the data in the "usage status" of the equipment stored in the equipment information storage unit 110 to "in use."

In step S1014, the seat management apparatus 11 transmits a request for unlocking information to the locker control apparatus 12.

In step S1015, the locker control apparatus 12 generates unlocking information (e.g., a passcode) of the locker in which the equipment is stored, and transmits the unlocking information to the seat management apparatus 11. The locker control apparatus 12 may transmit the unlocking information stored in association with the locker number for identifying the locker in which the equipment is stored, instead of generating the unlocking information.

In step S1016, the seat management apparatus 11 transmits a notification indicating the completion of the reception of the applications for using a seat and equipment, and the unlocking information to the information processing terminal 20.

In step S1017, the information processing terminal 20 displays the notification indicating the completion of the reception of the applications for using a seat and equipment, and the unlocking information.

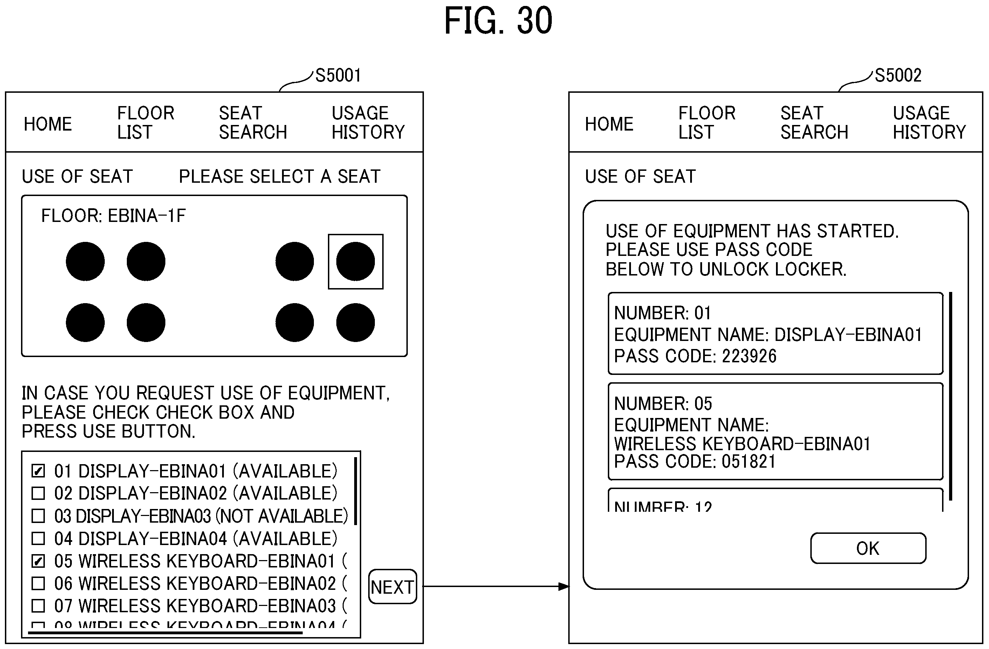

FIG. 30 is a diagram illustrating a user interface according to the fourth embodiment.

In step S5001, a screen for selecting a seat and equipment is displayed. When a seat and equipment are selected on the screen displayed in S5001, the process proceeds to step S5002.

In step S5002, a notification indicating the completion in making applications for using a seat and equipment, and the passcode for unlocking the locker are displayed.

### Fifth Embodiment

In the fifth embodiment, the use of equipment not stored in a locker is managed. In the fifth embodiment, since the equipment is not stored in a locker, at least one of information indicating a location where the equipment is arranged and information indicating a procedure for using the equipment is used as information for using the equipment, instead of the unlocking information of the locker.

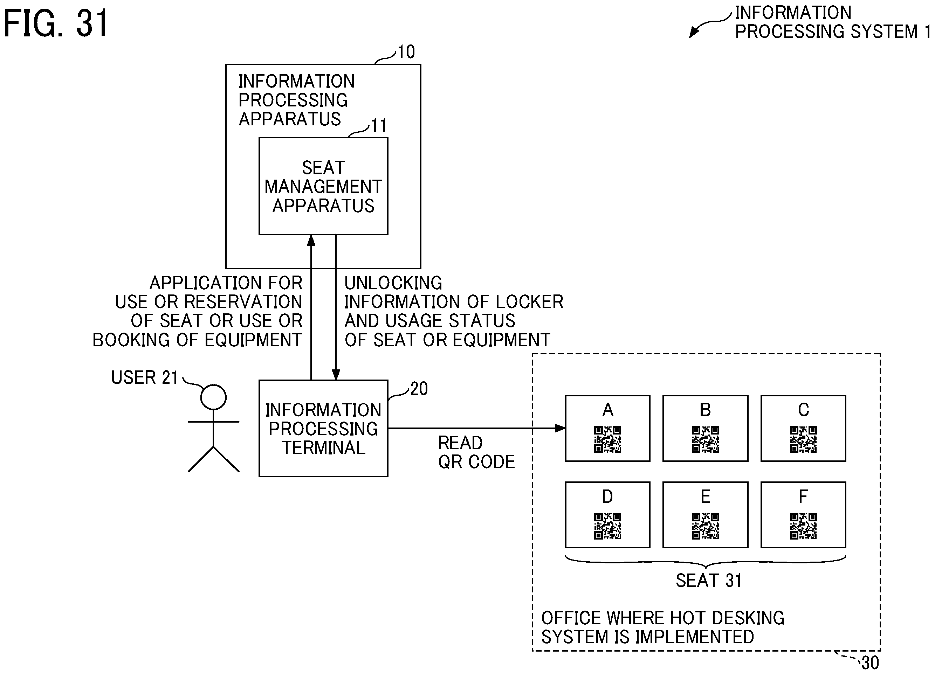

FIG. 31 is a diagram illustrating an overall configuration of the information processing system 1 according to the fifth embodiment. According to the fifth embodiment, the information processing system 1 includes the information processing apparatus (also referred to as a server apparatus) 10 and the information processing terminal (also referred to as a communication terminal) 20. The information processing system 1 manages the seats (e.g., the seats A to F in FIG. 31) 31 installed in the office 30 where the hot desking system is implemented. The information processing apparatus 10 includes the seat management apparatus (also referred to as a server apparatus) 11.

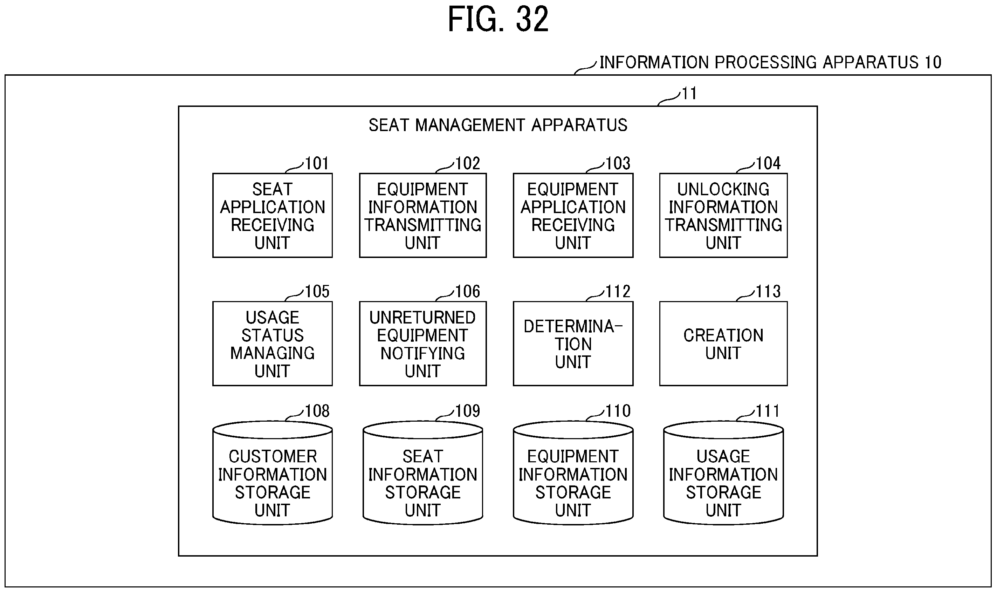

FIG. 32 is a block diagram illustrating a functional configuration of the information processing apparatus 10 according to the fifth embodiment. According to the fifth embodiment, the seat management apparatus 11 includes the seat application receiving unit 101, the equipment information transmitting unit 102, the equipment application receiving unit 103, the unlocking information transmitting unit 104, the usage status managing unit 105, the unreturned equipment notifying unit 106, the customer information storage unit 108, the seat information storage unit 109, the equipment information storage unit 110, the usage information storage unit 111, the determination unit 112, and the creation unit 113. Since the functions are substantially the same as those of the first embodiment, the descriptions thereof are omitted.

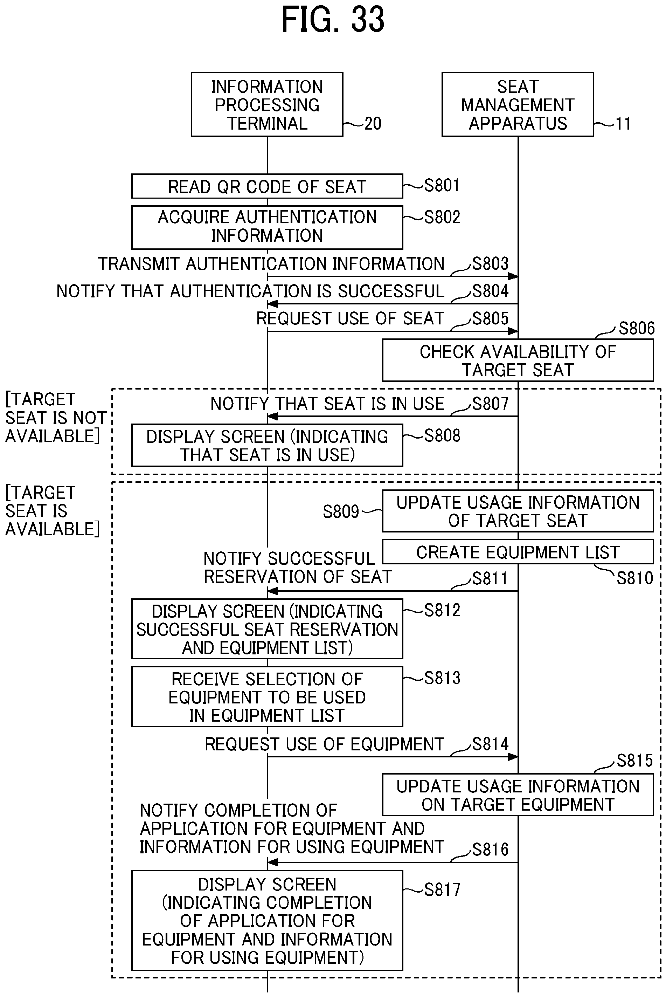

FIG. 33 is a sequence diagram illustrating the process for making applications for using a seat and equipment according to the fifth embodiment. Since the processes of steps S801 through S814 are substantially the same as the processes of steps S103 through S116 in FIG. 10 (FIGS. 10A and 10B), the descriptions thereof are omitted.

In step S815, the seat management apparatus 11 refers to the equipment information storage unit 123 and changes the data in the "usage status" of the equipment to "in use."

In step S816, the seat management apparatus 11 notifies the information processing terminal 20 of the completion of the reception of the application for using equipment and information for using the equipment.

In step S817, the information processing terminal 20 displays a notification indicating the completion of the reception of the application for using equipment and the information for using the equipment.

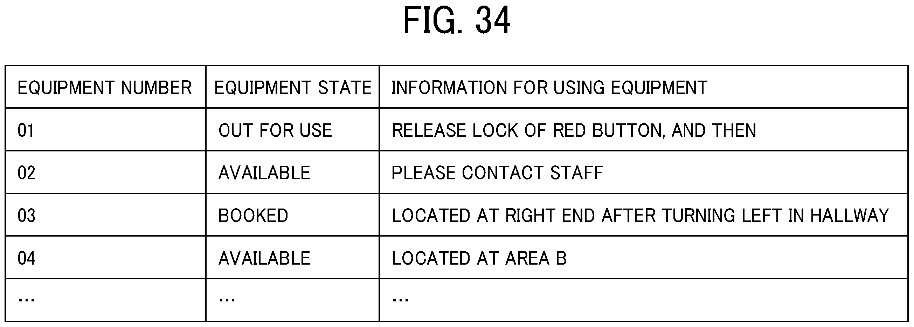

FIG. 34 is a diagram illustrating a table used for managing the information for using equipment according to the fifth embodiment. A table that includes an "equipment number," an "equipment state," and "information for using equipment" is stored in the seat management apparatus 11.

The "equipment number" is the number of the equipment.

The "equipment state" indicates whether the equipment is in use, the equipment is available, or the equipment is already booked.

The "information for using equipment" indicates, for example, information indicating a location where the equipment is arranged or information indicating a procedure for using the equipment.

### Sixth Embodiment

In the sixth embodiment, the use of a locker is managed (in other words, the locker itself is treated as equipment). In the sixth embodiment, the locker is locked at the point of time when an application for using equipment is made. While the user uses the locker (equipment), the locker can be unlocked with the unlocking information any number of times.

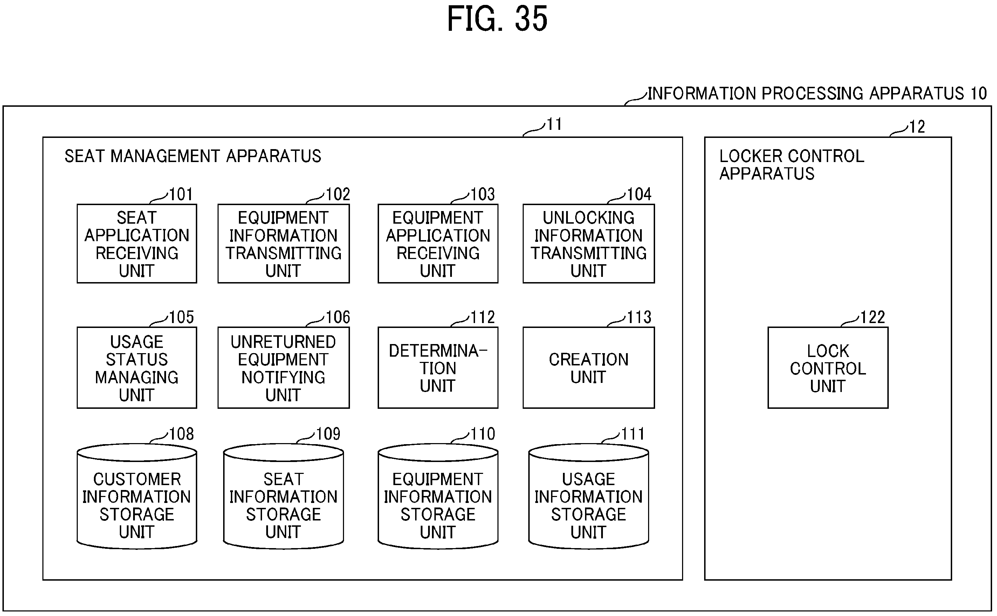

FIG. 35 is a block diagram illustrating a functional configuration of the information processing apparatus 10 according to the sixth embodiment. According to the sixth embodiment, the seat management apparatus 11 includes the seat application receiving unit 101, the equipment information transmitting unit 102, the equipment application receiving unit 103, the unlocking information transmitting unit 104, the usage status managing unit 105, the unreturned equipment notifying unit 106, the customer information storage unit 108, the seat information storage unit 109, the equipment information storage unit 110, the usage information storage unit 111, the determination unit 112, and the creation unit 113. The locker control apparatus 12 includes the lock control unit 122. Since the functions are substantially the same as those of the first embodiment, the descriptions thereof are omitted.

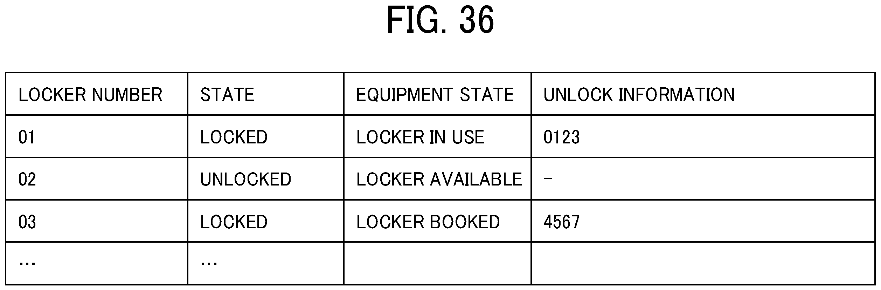

FIG. 36 is a diagram illustrating a table used for managing the unlocking information according to the sixth embodiment. A table that includes a "locker number," a "state," an "equipment state," and "unlocking information" is stored in the seat management apparatus 11.

The "locker number" is the number of the smart locker 32. In the sixth embodiment, since the locker is equipment, the locker number is identification information for identifying the locker and also identification information for identifying the equipment.

The "state" indicates whether the smart locker 32 is locked or unlocked.

The "equipment state" indicates whether the locker is in use, the locker is available, or the locker is already booked.

The "unlocking information" indicates the unlocking information of the smart locker 32.

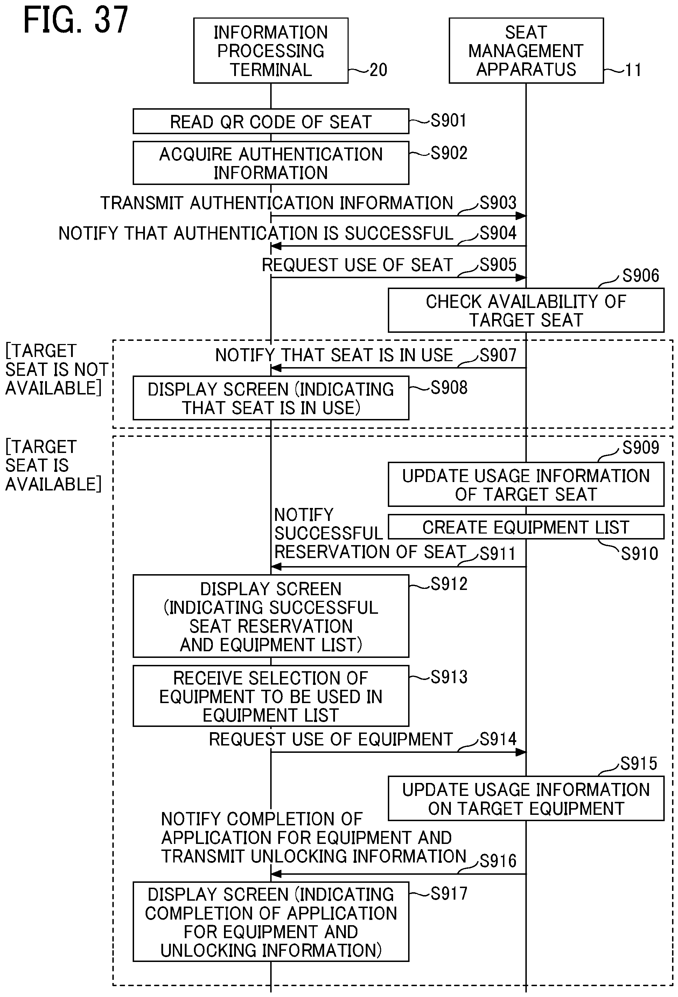

FIG. 37 is a sequence diagram illustrating the process for making applications for using a seat and equipment according to the sixth embodiment. Since the processes of steps S901 through S914 are substantially the same as the processes of steps S103 through S116 in FIG. 10 (FIGS. 10A and 10B), the descriptions thereof are omitted.

In step S915, the seat management apparatus 11 refers to the equipment information storage unit 123 and changes the data in the "usage status" of the equipment to "in use."

In step S916, the seat management apparatus 11 transmits, to the information processing terminal 20, a notification indicating the completion of the reception of the application for using equipment and the unlocking information (e.g., a passcode) of the locker.

In step S917, the information processing terminal 20 displays the notification indicating the completion of the reception of the application for using equipment and the unlocking information (e.g., a passcode) of the locker.

### Seventh Embodiment

In the seventh embodiment, not the use of a seat in a facility but the use of the facility is managed. For example, the facility may be a gym and the equipment may be a sport gear, or the facility may be a hot spring facility and the equipment may be a towel.

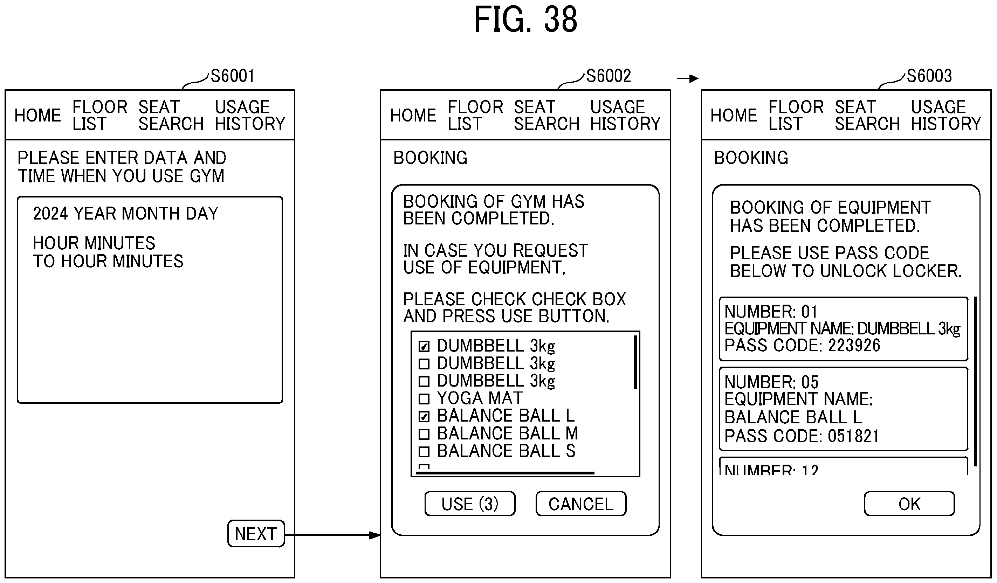

FIG. 38 is a diagram illustrating a user interface according to the seventh embodiment.

In step S6001, a screen for inputting the date and time when a facility (e.g., a gym) is to be booked is displayed. When the date and time is input on the screen displayed in step S6001, the process proceeds to step S6002.

In step S6002, a notification indicating that the booking of the facility made in S6001 is completed and a list of equipment that the user 21 can book are displayed. When the user 21 selects equipment, the process proceeds to step S6003.

In step S6003, a notification indicating the completion of the booking of the equipment selected in S6002 and the passcode for unlocking the locker are displayed.

As described above, in one embodiment of the present disclosure, the user can make an application for using a seat and an application for using equipment stored in a smart locker at one time in a series of procedures (i.e., simultaneously). Thus, the operations to separately make an application for using a seat and an application for using equipment are saved. In addition, in one embodiment of the present disclosure, since the seat management apparatus that manages a seat also manages the usage status of equipment, the usage status of the seat and the equipment being used by the user can be grasped together. Thus, the equipment can be prevented from being lost.

Each of the functions of the embodiments described above may be implemented by one or more processing circuits or circuitry. The "processing circuit or circuitry" herein includes a programmed processor to execute each function by software, such as a processor implemented by an electronic circuit, and devices, such as an application-specific integrated circuit (ASIC), a digital signal processor (DSP), a field-programmable gate array (FPGA), and circuit modules known in the art arranged to perform the recited functions.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

In another aspect, a server apparatus includes an equipment information transmitting unit to transmit a notification indicating completion of reception of a first application for using a seat and a notification indicating completion of reception of a second application for using equipment.

In another aspect, a server apparatus manages use of a facility and use of equipment in the facility. The server apparatus includes a seat application receiving unit to receive a first application for requesting the use of the facility by a user from a communication terminal, an equipment application receiving unit to receive a second application for requesting the use of the equipment by the user from the communication terminal, an equipment usage information transmitting unit to transmit, to the communication terminal, information for using the equipment, the information being stored in association with identification information for identifying the equipment relating to the second application for the use of the equipment by the user, the second application having been received by the equipment application receiving unit, and a usage information storage unit to store information on the equipment relating to the first application and the identification information for identifying the equipment relating to the second application in association with each other.

## Claims

1. A server apparatus (1) for managing use of a seat in a facility and use of equipment in the facility, the server apparatus comprising:
a seat application receiving unit (101) configured to receive a first application for requesting use of the seat by a user from a communication terminal;
a creation unit (113) configured to create a list of identification information for identifying the equipment in the facility in response to receiving the first application;
an equipment usage information transmitting unit (104) configured to transmit the list of identification information to the communication terminal;
an equipment application receiving unit (103) configured to receive a second application for requesting use of the equipment by the user, from the communication terminal, the equipment being identified with the identification information;
the equipment usage information transmitting unit (104) configured to transmit, to the communication terminal, information for using the equipment, the information being stored in association with the identification information for identifying the equipment relating to the second application; and
a usage information storage unit (111) configured to store information on the seat relating to the first application and the identification information for identifying the equipment relating to the second application in association with each other.

2. The server apparatus (1) according to claim 1, further comprising an equipment information transmitting unit (102) configured to transmit information on the equipment in the facility to the communication terminal in response to receiving the first application, wherein:
the information on the equipment transmitted to the communication terminal is a list of a plurality of pieces of equipment in the facility for use by the user; and
the second application includes the identification information for identifying the equipment selected by the user from the list of the plurality of pieces of equipment.

3. The server apparatus (1) according to claim 1, further comprising an equipment information transmitting unit (102) configured to transmit information on the equipment in the facility to the communication terminal in response to receiving the first application, wherein:
the information on the equipment transmitted to the communication terminal is information indicating one type of equipment in the facility for use by the user; and
the second application requests the use of the one type of equipment.

4. The server apparatus (1) according to claim 1, wherein the information for using the equipment is at least one of information indicating a location of the equipment or information indicating a procedure for using the equipment.

5. The server apparatus (1) according to claim 1, wherein the information for using the equipment is unlocking information for unlocking a locker in which the equipment is stored.

6. The server apparatus (1) according to claim 1, wherein the seat application receiving unit (101) is configured to transmit information on unreturned equipment of the user to the communication terminal in response to receiving an application for ending the use of the seat from the communication terminal.

7. The server apparatus (1) according to claim 1, further comprising an unreturned equipment notifying unit (106) configured to periodically transmit information on unreturned equipment of the user to the communication terminal.

8. The server apparatus (1) according to claim 1, wherein the equipment includes a locker available to the user using the seat, the locker being in a same area as the seat used by the user.

9. The server apparatus (1) according to claim 1, wherein:
the first application requests to start using the seat in response to receiving the first application or at a date and time specified by the user; and
the second application requests to start using the equipment in response to receiving the second application or at a date and time specified by the user.

10. The server apparatus (1) according to claim 2 or 3, wherein the equipment usage information transmitting unit (104) is configured to transmit unlocking information for unlocking a locker to the communication terminal in response to starting of the use of the seat.

11. The server apparatus (1) according to claim 10, wherein the unlocking information is any one of a one-dimensional code, a two-dimensional code, and a character string including at least one of letters, numbers, or symbols.

12. A method performed by a server apparatus (1) for managing use of a seat in a facility and use of equipment in the facility, the method comprising:
receiving (S107) a first application for requesting use of the seat by a user from a communication terminal;
creating (S112) a list of identification information for identifying the equipment in the facility in response to receiving the first application;
transmitting (5113) the list of identification information to the communication terminal;
receiving (S 116) a second application for requesting use of the equipment by the user from the communication terminal, the equipment being identified with the identification information;
storing (S118) information on the seat relating to the first application and the identification information for identifying the equipment relating to the second application in association with each other; and
transmitting (S120), to the communication terminal, information for using the equipment, the information being stored in association with the identification information for identifying the equipment relating to the received second application.

13. A carrier medium carrying computer-readable code for controlling a server apparatus (1) for managing use of a seat in a facility and use of equipment in the facility to carry out a method, the method comprising:
receiving (S107) a first application for requesting use of the seat by a user from a communication terminal;
creating (S112) a list of identification information for identifying the equipment in the facility in response to receiving the first application;
transmitting (5113) the list of identification information to the communication terminal;
receiving (S116) a second application for requesting use of the equipment by the user from the communication terminal, the equipment being identified with the identification information;
storing (S118) information on the seat relating to the first application and the identification information for identifying the equipment relating to the second application in association with each other; and
transmitting (S120), to the communication terminal, information for using the equipment, the information being stored in association with the identification information for identifying the equipment relating to the received second application.
